(19) Europäisches Patentamt
European Patent Office
Office européen des brevets

(11) **EP 4 610 129 A1**

(12) **EUROPEAN PATENT APPLICATION**
published in accordance with Art. 153(4) EPC

(43) Date of publication:
03.09.2025 Bulletin 2025/36

(21) Application number: 23882593.9

(22) Date of filing: 23.10.2023

(51) International Patent Classification (IPC):
*B60W 30/09* (2012.01)    *B60W 40/06* (2012.01)
*B60W 50/06* (2006.01)    *B60W 60/00* (2020.01)
*G08G 1/0968* (2006.01)    *G08G 1/16* (2006.01)

(52) Cooperative Patent Classification (CPC):
B60W 30/09; B60W 40/06; B60W 50/06;
B60W 60/00; G08G 1/0968; G08G 1/16

(86) International application number:
PCT/JP2023/038225

(87) International publication number:
WO 2024/090388 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.10.2022  JP 2022170165
14.11.2022  JP 2022182131
22.11.2022  JP 2022186645
05.01.2023  JP 2023000629
05.01.2023  JP 2023000630
11.01.2023  JP 2023002663

16.01.2023  JP 2023004746
23.01.2023  JP 2023008289
23.01.2023  JP 2023008290

(71) Applicant: SoftBank Group Corp.
Tokyo 105-7537 (JP)

(72) Inventor: SON, Masayoshi
Tokyo 105-7537 (JP)

(74) Representative: DREISS Patentanwälte PartG
mbB
Friedrichstraße 6
70174 Stuttgart (DE)

(54) **INFORMATION PROCESSING DEVICE AND PROGRAM**

(57) An information processing apparatus includes: an acquisition unit that acquires plural pieces of information related to a vehicle from a detection unit including a sensor that detects a situation around the vehicle including an obstacle at a second cycle shorter than a first cycle at which surroundings of the vehicle are imaged, as a cycle for detecting the situation around the vehicle; a calculation unit that includes a setting unit that sets a traveling strategy for the vehicle to avoid the obstacle based on the plural pieces of acquired information, and calculates a control variable for controlling behavior of the vehicle based on the plural pieces of acquired information and the set traveling strategy; and a control unit that controls the behavior of the vehicle based on the calculated control variable.

FIG.3

START

ACQUIRE SENSOR INFORMATION — S10

CALCULATE CONTROL VARIABLES — S11

CONTROL AUTONOMOUS DRIVING — S12

END

**Description**

Technical Field

The present invention relates to an information processing apparatus and a program.

Background Art

Japanese Patent Application Laid-Open (JP-A) No. 2022-035198 describes a vehicle having an autonomous driving function.

SUMMARY OF INVENTION

Solution to Problem

According to an embodiment of the present invention, an information processing apparatus is provided. The information processing apparatus includes: an acquisition unit that acquires a plurality of pieces of information related to a vehicle from a detection unit including a sensor that detects a situation around the vehicle including an obstacle at a second cycle shorter than a first cycle at which surroundings of the vehicle are imaged, as a cycle for detecting the situation around the vehicle; a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; and a control unit that controls the behavior of the vehicle based on the calculated control variable.

According to an embodiment of the invention, in the information processing apparatus, the calculation unit calculates the control variable from the index values by multivariate analysis by an integration method using deep learning.

According to an embodiment of the invention, in the information processing apparatus, the acquisition unit acquires the plurality of pieces of information in units of 1/1 billion seconds, the calculation unit calculates the control variable by using the information acquired in units of 1/1 billion seconds, and the control unit performs the control of the behavior of the vehicle by using the control variable in units of 1/1 billion seconds.

According to an embodiment of the invention, in the information processing apparatus, the setting unit applies, as the traveling strategy, a traveling pattern related to a traveling path to reach a destination while avoiding the obstacle, and sets a traveling pattern in which a size of a space between the vehicle and the obstacle exceeds a predetermined value among a plurality of different traveling patterns.

According to an embodiment of the invention, in the information processing apparatus, the calculation unit calculates the control variable such that the vehicle travels according to the set traveling pattern.

According to an embodiment of the invention, in the information processing apparatus, the control variable is a speed of the vehicle and a timing of changing the speed of the vehicle.

According to an embodiment of the present disclosure, the information processing apparatus further includes a transmission unit that transmits the control variable calculated by the calculation unit to another vehicle present around the vehicle in a case where it is determined that the vehicle performs emergency behavior based on the control variable.

According to an embodiment of the disclosure, the information processing apparatus further includes a transmission unit that transmits a signal indicating that the vehicle performs emergency behavior to another vehicle present around the vehicle in a case where it is determined that the vehicle performs the emergency behavior based on the control variable calculated by the calculation unit.

According to an embodiment of the disclosure, in the information processing apparatus, the calculation unit calculates the control variable from the index values by multivariate analysis by an integration method using deep learning.

According to an embodiment of the disclosure, an information processing apparatus is provided. The information processing apparatus includes: an acquisition unit that acquires a plurality of pieces of information related to a vehicle from a detection unit including a sensor that detects a situation around the vehicle including an obstacle at a second cycle shorter than a first cycle at which surroundings of the vehicle are imaged, as a cycle for detecting the situation around the vehicle; a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; a control unit that controls the behavior of the vehicle based on the calculated control variable; a reception unit that receives a plurality of pieces of information related to another vehicle including a situation around the another vehicle and acquired by a sensor of the another vehicle in a case where the control unit determines that the vehicle is to collide with the obstacle and the obstacle is the another vehicle; and a transmission unit that causes the calculation unit to calculate a control variable for controlling behavior of the another vehicle based on at least the plurality of pieces of information related to the another vehicle and the plurality of pieces of information related to the vehicle, and transmits the calculated control variable for controlling the behavior of the another vehicle to the another vehicle.

According to an embodiment of the disclosure, in the information processing apparatus, the control variable for controlling the behavior of the another vehicle is calculated based on at least the plurality of pieces of information related to the another vehicle, the plurality of pieces of information related to the vehicle, and the control variable for controlling the behavior of the vehicle.

According to an embodiment of the disclosure, in the information processing apparatus, the calculation unit calculates the control variable from the index values by multivariate analysis by an integration method using deep learning.

According to an embodiment of the present invention, an information processing apparatus is provided. The information processing apparatus includes: a registration unit that registers a plurality of different traveling patterns that are past traveling patterns of a vehicle for avoiding an obstacle; an acquisition unit that acquires a plurality of pieces of information related to the vehicle from a detection unit including a sensor that detects a situation around the vehicle including the obstacle; a calculation unit that includes a setting unit that selectively sets a traveling pattern for the vehicle to avoid the obstacle from among the plurality of registered traveling patterns by using the plurality of pieces of acquired information, and calculates a control variable for controlling behavior of the vehicle such that the vehicle travels according to the traveling pattern based on the plurality of pieces of acquired information and the set traveling pattern; and a control unit that controls the behavior of the vehicle based on the calculated control variable.

According to an embodiment of the invention, in the information processing apparatus, the registration unit registers the traveling pattern for each vehicle to be controlled or for each vehicle type of the vehicle.

According to an embodiment of the invention, in the information processing apparatus, the obstacle is another vehicle other than the vehicle.

According to an embodiment of the present invention, an information processing apparatus is provided. The information processing apparatus includes: an acquisition unit that acquires a plurality of pieces of information related to a vehicle from a detection unit including a sensor that detects a situation around the vehicle including an obstacle; a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; and a control unit that controls the behavior of the vehicle based on the calculated control variable, in which the setting unit applies, as the traveling strategy, a traveling pattern related to a traveling path to reach a destination while avoiding the obstacle, and sets a traveling pattern in which a size of a space that changes in time series according to movement of at least one of the vehicle and the obstacle between the vehicle and the obstacle is maximized among a plurality of different traveling patterns.

According to an embodiment of the invention, in the information processing apparatus, the obstacle is another vehicle other than the vehicle.

According to an embodiment of the present invention, an information processing apparatus is provided. The information processing apparatus includes: an acquisition unit that acquires a plurality of pieces of information related to a vehicle from a detection unit including a sensor that detects a situation around the vehicle including an obstacle; a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; and a control unit that controls the behavior of the vehicle based on the calculated control variable, in which the setting unit applies, as the traveling strategy, a traveling pattern related to a traveling path to reach a destination while avoiding the obstacle, sets a weighting value according to a risk of a collision including a contact with the obstacle by using the plurality of pieces of acquired information for a plurality of different traveling patterns, and selectively sets a traveling pattern from among the plurality of different traveling patterns according to the set weighting value.

According to an embodiment of the invention, in the information processing apparatus, the weighting value is a value indicating a low risk or a value indicating a high risk.

According to an embodiment of the invention, in the information processing apparatus, the obstacle is another vehicle other than the vehicle.

According to an embodiment of the invention, in the information processing apparatus, the setting unit sets a value indicating a higher risk as the weighting value in a case where the vehicle protrudes from a traveling lane than in a case where the vehicle does not protrude from the traveling lane.

According to an embodiment of the invention, in the information processing apparatus, the setting unit sets a value indicating a lower risk as the weighting value as a size of a space between the vehicle and the obstacle is larger.

According to an embodiment of the invention, there is provided a program for causing a computer to function as the information processing apparatus.

Note that the summary of the invention described above does not enumerate all the necessary features of the invention. Further, a sub-combination of these feature groups can also be the invention.

BRIEF DESCRIPTION OF DRAWINGS

Fig. 1 is a diagram schematically showing a risk prediction capability of ultra-high performance autonomous driving artificial intelligence (AI) according to the present embodiment.

Fig. 2 is a diagram schematically showing an example of a network configuration in a vehicle according to the embodiment.

Fig. 3 is a flowchart executed by a central brain according to the embodiment.

Fig. 4 is a first explanatory diagram for describing an example of autonomous driving control by the central brain according to the embodiment.

Fig. 5 is a second explanatory diagram for describing an example of the autonomous driving control by the central brain according to the embodiment.

Fig. 6 is a third explanatory diagram for describing an example of the autonomous driving control by the central brain according to the embodiment.

Fig. 7 is a fourth explanatory diagram for describing an example of the autonomous driving control by the central brain according to the embodiment.

Fig. 8 is a fifth explanatory diagram for describing an example of the autonomous driving control by the central brain according to the embodiment.

Fig. 9 is a schematic diagram showing a state in which another vehicle is traveling around the vehicle when performing the autonomous driving control by the central brain according to the embodiment.

Fig. 10 is a first explanatory diagram for describing an example of setting of a traveling strategy by the central brain according to the embodiment.

Fig. 11 is a second explanatory diagram for describing an example of the setting of the traveling strategy by the central brain according to the embodiment.

Fig. 12 is a block diagram showing an example of a configuration of an information processing apparatus including the central brain according to the embodiment.

Fig. 13 is a schematic diagram showing a first relationship between an own vehicle and other vehicles for the traveling strategy set by the central brain according to the embodiment.

Fig. 14 is a schematic diagram showing the first relationship between the own vehicle and the other vehicles for the traveling strategy set by the central brain according to the embodiment.

Fig. 15 is a flowchart executed by the central brain according to the embodiment.

Fig. 16 is a diagram schematically showing an example of a hardware configuration of a computer functioning as the central brain.

Fig. 17A is a block diagram showing an example of a functional configuration of a central brain according to a second embodiment.

Fig. 17B is an example of a flowchart executed by the central brain according to the second embodiment.

Fig. 17C is an example of a flowchart executed by the central brain according to the second embodiment.

Fig. 18A is a block diagram showing an example of a functional configuration of a central brain according to a third embodiment.

Fig. 18B is an example of a flowchart executed by the central brain according to the third embodiment.

Fig. 18C is an example of a flowchart executed by the central brain according to the third embodiment.

Fig. 19A is an explanatory diagram for describing an example of setting of a traveling strategy by a central brain according to a fourth embodiment.

Fig. 19B is a flowchart executed by the central brain according to the fourth embodiment.

Fig. 19C is a flowchart executed by the central brain according to the fourth embodiment.

Fig. 20A is a schematic diagram showing a relationship between an own vehicle and other vehicles for a traveling strategy set by a central brain according to a fifth embodiment.

Fig. 20B is a flowchart executed by the central brain according to the fifth embodiment.

Fig. 21A is a schematic diagram showing a relationship between an own vehicle and other vehicles for a traveling strategy set by a central brain according to a sixth embodiment.

Fig. 21B is a flowchart executed by the central brain according to the sixth embodiment.

Fig. 22A is a conceptual diagram showing a traveling pattern based on a representative proportional constant.

Fig. 22B is a conceptual diagram showing a traveling pattern based on a combination of a plurality of proportional constants.

DESCRIPTION OF EMBODIMENTS

Hereinafter, the present invention will be described through embodiments of the invention, but the following embodiments do not limit the invention according to the claims. In addition, not all combinations of features described in the embodiments are essential to the solution of the invention.

An information processing apparatus according to the disclosure may obtain an index value necessary for driving control with high accuracy based on a large amount of information related to vehicle control. Therefore, at least a part of the information processing apparatus according to the disclosure may be mounted on a vehicle and implements the vehicle control.

Furthermore, the information processing apparatus according to the disclosure can provide a traveling system that can implement autonomous driving at Level 6 in real time based on data obtained by various sensor inputs in artificial intelligence (AI)/multivariate analysis/goal seek/strategy planning/optimal probabilistic solution/optimal speed solution/optimal course management/edge and is adjusted based on a delta optimal solution.

"Level 6" is a level representing the autonomous driving and corresponds to a level higher than Level 5 representing fully autonomous driving. Level 5 represents the fully autonomous driving, but Level 5 is equivalent to a level of human driving, and there is still a probability that an accident or the like occurs. Level 6 represents a level higher than Level 5, and corresponds to a level at which a probability that an accident occurs is lower than that of Level 5.

Computational power at Level 6 is about 1000 times the computational power at Level 5. Therefore, Level 6 can implement high-performance driving control that cannot be implemented at Level 5.

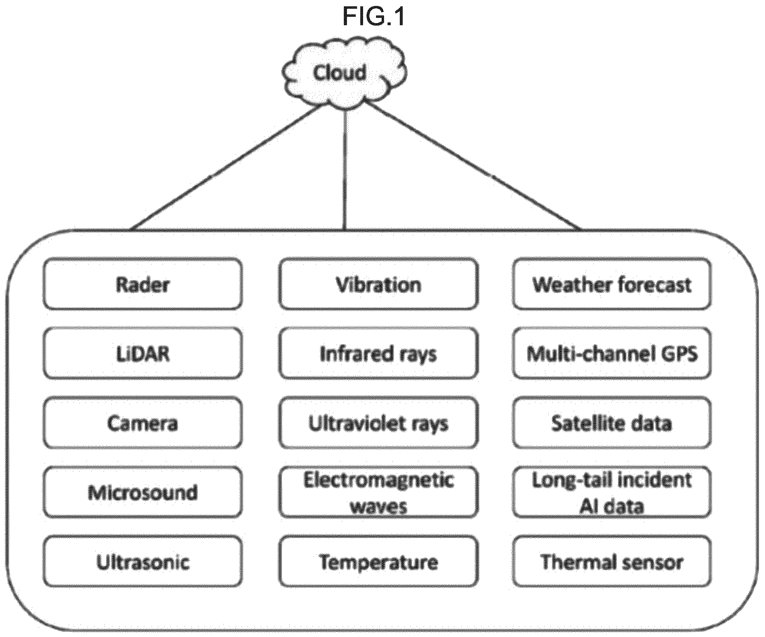

Fig. 1 schematically shows a risk prediction capability of ultra-high performance autonomous driving artificial intelligence (AI) according to the present embodiment. In the embodiment, a plurality of types of sensor information acquired by a plurality of types of sensors as detection units are converted into AI data and accumulated in a cloud. The AI predicts and determines the best combination of situations every nanosecond (1/1 billion seconds) and optimizes operation of a vehicle 12.

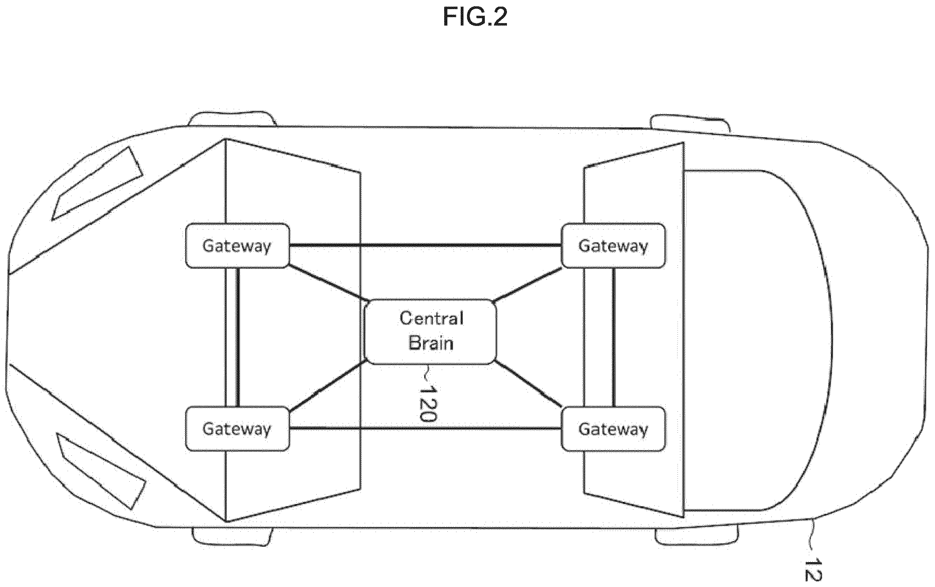

Fig. 2 is a schematic diagram showing an example of the vehicle 12 on which a central brain 120 is mounted. The central brain 120 may be an example of an information processing apparatus 1 according to the embodiment. As shown in Fig. 2, a plurality of gateways may be communicably connected to the central brain 120. The central brain 120 according to the embodiment can implement autonomous driving of Level L6 based on a plurality of pieces of information acquired via the gateways. The central brain 120 is an example of the information processing apparatus.

As shown in Fig. 2, the plurality of gateways are communicably connected to the central brain 120. The central brain 120 is connected to an external cloud via the gateways. The central brain 120 is configured to be able to access the external cloud via the gateways. On the other hand, the central brain 120 cannot be directly accessed from the outside due to the presence of the gateways.

The central brain 120 outputs a request signal to a server every time a predetermined time elapses. Specifically, the central brain 120 outputs a request signal indicating an inquiry to the server every 1/1 billion seconds.

Examples of a sensor provided in the vehicle 12 used in the embodiment include a radar, a LiDAR, a high-pixel, telephoto, ultra-wide angle, 360-degrees, high-performance camera, sensors for vision recognition, microsound, ultrasonic waves, vibration, an infrared ray, an ultraviolet ray, electromagnetic waves, a temperature, and a humidity, spot AI weather forecast, high-accuracy multi-channel GPS, low-altitude satellite information, and long-tail incident AI data. The long-tail incident AI data is trip data of an automobile having a function capable of implementing autonomous driving of Level 5.

The sensor includes a sensor that detects a situation around the vehicle. The sensor that detects the situation around the vehicle detects the situation around the vehicle at a second cycle shorter than a first cycle at which the surroundings of the vehicle are imaged by a camera or the like, as a cycle for detecting the situation around the vehicle.

Examples of the sensor information to be taken in from the plurality of types of sensors include center of gravity shift in a weight, detection of road material, detection of outside-air temperature, detection of outside-air humidity, detection of vertical and lateral inclination angles of slopes, detection of a freezing state and a moisture level of a road, detection of a material, a wear condition, and a tire pressure of each tire, a road width, the presence or absence of no-passing zones, an oncoming vehicle, vehicle type information of preceding and following vehicles, cruising states of such vehicles, and a surrounding situation (birds, animals, soccer balls, accident vehicles, earthquakes, housework, winds, typhoons, heavy rain, light rain, snowstorm, fog, or the like), and in the embodiment, such detections are performed every 1/1 billion seconds.

The central brain 120 functioning as an example of the information processing apparatus according to the embodiment has at least respective functions of an acquisition unit that can acquire a plurality of pieces of information related to a vehicle, a calculation unit that calculates a control variable from the plurality of pieces of information acquired by the acquisition unit, and a control unit that performs driving control of the vehicle based on the control variable.

For example, the central brain 120 functions to calculate the control variable by using one or more pieces of sensor information detected by the above sensors. The control variable includes a control variable for controlling a wheel speed and an inclination of each of four wheels of the vehicle, and control variables for controlling the wheel speed, the inclination, and a suspension supporting the wheel for each suspension. The inclination of the wheel includes both an inclination of the wheel with respect to an axis horizontal to a road and an inclination of the wheel with respect to an axis perpendicular to the road.

Here, as the one or more pieces of sensor information, sensor information from a sensor that detects a situation around the vehicle can be applied. In addition, in a case where a plurality of pieces of sensor information are used as the one or more pieces of sensor information, a predetermined number of pieces of sensor information can be applied. The predetermined number is, for example, three. Index values for controlling the wheel speed, the inclination, and the suspension are calculated based on the three pieces of sensor information. The number of index values calculated from the combination of the three pieces of sensor information is, for example, three. The index values for controlling the wheel speed, the inclination, and the suspension include, for example, an index value calculated from information regarding an air resistance among the pieces of sensor information, an index value calculated from information regarding a road resistance among the pieces of sensor information, and an index value calculated from information regarding a slip coefficient among the pieces of sensor information.

Further, the index values calculated for one piece of sensor information or each of different combinations of the plurality of pieces of sensor information are aggregated to calculate the control variables for controlling the wheel speed, the inclination, and the suspension. For example, the index value is calculated from the sensor information of the sensor that detects the situation around the vehicle to calculate the control variable. In a case where a plurality of pieces of sensor information are used, for example, a plurality of index values are calculated for a combination of sensors 1, 2, and 3, a plurality of index values are calculated for a combination of the sensors 4, 5, and 6, a plurality of index values are calculated for a combination of the sensors 1, 3, and 7, and the control variable is calculated by aggregating the index values. In this manner, a predetermined number of index values, for example, 300 index values, are calculated while changing the combination of the pieces of sensor information, thereby calculating the control variable. Specifically, the calculation unit may be able to calculate the control variable from the sensor information by using machine learning, more specifically, deep learning. In other words, the calculation unit that calculates the index value and the control variable can include artificial intelligence (AI).

The calculation unit can obtain an accurate control variable by performing multivariate analysis (see, for example, Formula (2)) by an integration method as shown in the following Formula (1) using computational power of Level 6 for data collected every nanosecond by many sensor groups and the like. More specifically, an indexed value of each variable is obtained at an edge level and in real time while obtaining an integral value of various ultra high resolution delta values with the computational power of Level 6, and a result obtained in the next nanosecond can be acquired as the highest probabilistic value.

[Math. 1]

$$V = \int_a^b f(A)dt \qquad (1)$$

[Math. 2]

$$V_n = DL\big(f(A, B, C, \dots, N)(dA_n/dt)\big) \qquad (2)$$

DL in the formula represents deep learning, and A, B, C, D, ..., and N represent index values calculated from the sensor information. A, B, C, D, ..., and N represent, for example, the index value calculated from the air resistance, the index value calculated from the road resistance, an index value calculated from a road element, an index value calculated from the slip coefficient, and the like. In a case where the number of index values calculated while changing the combination of the predetermined number of pieces of sensor information is 300, the number of index values of A to N in the formula is also 300, and 300 index values are aggregated. $V_n$ is the control variable.

Although the wheel speed (V) is calculated in Formula (2) above, the control variables for controlling the inclination and the suspension are similarly calculated.

Specifically, the central brain 120 calculates a total of 16 control variables for controlling the wheel speed of each of the four wheels, the inclination of each of the four wheels with respect to the axis horizontal to the road, the inclination of each of the four wheels with respect to the axis perpendicular to the road, and the suspension supporting each of the four wheels. In the embodiment, 16 control variables described above are calculated every 1/1 billion seconds. The wheel speed of each of the four wheels can also be referred to as "the number of spins (rotations) of an in-wheel motor mounted on each of the four wheels", and the inclination of each of the four wheels with respect to the axis horizontal to the road can also be referred to as "a horizontal angle of each of the four wheels". For example, in a case where the vehicle travels on a mountain road, the control variable is a numerical value for performing optimal steering suitable for the mountain road, and in a case where the vehicle is parked in a parking lot, the control variable is a numerical value for traveling at an optimal angle suitable for the parking lot.

Furthermore, in the embodiment, the central brain 120 calculates a total of 16 control variables for controlling the wheel speed of each of the four wheels, the inclination of each of the four wheels with respect to the axis horizontal to the road, the inclination of each of the four wheels with respect to the axis perpendicular to the road, and the suspension supporting each of the four wheels. However, the calculation does not need to be performed by the central brain 120, and a dedicated anchor chip for calculating the control variables may be separately provided. Also in this case, DL in Formula (2) represents deep learning, and A, B, C, D, ..., and N represent index values calculated from the sensor information. In a case where the number of indexes to be aggregated is 300 as described above, the number of indexes in such a formula is also 300.

Furthermore, in the embodiment, the central brain 120 functions as a control unit that controls the autonomous driving in units of 1/1 billion seconds based on the control variables calculated above. Specifically, the central brain 120 controls the in-wheel motors mounted on the four wheels based on the 16 control variables described above. As a result, the autonomous driving is performed by controlling the wheel speed and the inclination of each of the four wheels of the vehicle 12 and the suspension supporting each of the four wheels.

As for the index value calculated from the sensor information, the control variable may be calculated by calculating the index value from the sensor information of one sensor, for example, the sensor that detects the situation around the vehicle at the time of the sensor that detects the situation around the vehicle.

The calculation unit described above includes a setting unit that sets a traveling strategy related to traveling of the vehicle from the plurality of pieces of acquired information. As an example of the traveling strategy related to the traveling of the vehicle, it is possible to apply a traveling strategy such as a traveling pattern for avoiding an obstacle in a case where the obstacle is present on a traveling path of the vehicle. In the traveling strategy, information including the traveling pattern related to the traveling path to reach a destination while avoiding the obstacle can be applied.

The setting unit may set, as the destination, a position to be reached after a predetermined time elapses from a current position when the vehicle travels, and set, as the traveling strategy, information regarding the traveling from the current position to the destination. In addition, the setting unit may set, as the destination, a predetermined position from the current position, and set, as the traveling strategy, the information regarding the traveling from the current position to the destination.

The setting unit may set, as the traveling strategy, the information regarding the traveling from the current position to the destination based on information regarding the destination input by an occupant or the like of the vehicle, traffic information between the current position and the destination, or the like. At this time, information at that time point when a strategy setting is calculated, that is, data currently acquired by the information acquisition unit, may be added. This is to calculate a more realistic theoretical value by taking into account not only simple calculation of a route to the destination but also a surrounding situation at that moment. The traveling strategy may include at least one theoretical value of an optimal route (strategy route) to the destination, a traveling speed, a tilt, and braking. It is preferable that the traveling strategy can include all the theoretical values of the optimal route, the traveling speed, the tilt, and the braking described above.

The plurality of theoretical values included in the traveling strategy set by the setting unit can be used for autonomous driving control in the control unit. In addition, the control unit may include an update unit that updates the traveling strategy based on a difference between the plurality of index values calculated by the calculation unit and each theoretical value set by the setting unit.

The index value calculated by the calculation unit is information acquired during the traveling of the vehicle. Specifically, the index value calculated by the calculation unit is detected during actual traveling. For example, the index value is inferred based on a friction coefficient. Therefore, it is possible to cope with a momentary change at the time of traveling along the strategy route as the update unit updates the traveling strategy. Specifically, the update unit calculates the difference (delta value) from the theoretical value and the index value included in the traveling strategy, so that an optimal solution can be derived again and the strategy route can be reformulated. As a result, it is possible to implement the autonomous driving control at the very limit without slipping. In addition, since the computational power of Level 6 described above can be used in such update processing, correction and fine adjustment can be performed in units of 1/1 billion seconds, and more precise traveling control can be implemented.

In addition, in a case where the acquisition unit includes the above-described vehicle lower sensor, the vehicle lower sensor also detects the temperature, the material, and the like of the ground, so that it is possible to cope with a momentary change at the time of traveling along the strategy route. The independent smart tilt can also be executed in calculating a traveling course included in the traveling strategy. Furthermore, even in a case where another information is detected (a flying tire, debris, animals, or the like), it is possible to recalculate an optimal traveling course at an instant and perform optimal course management by coping with a momentary change at the time of traveling along the strategy route.

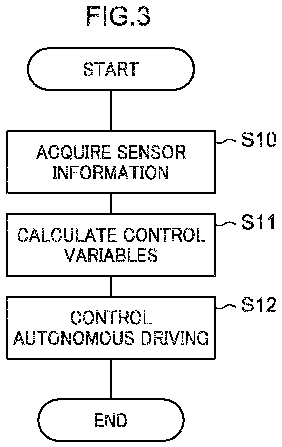

The central brain 120 repeatedly executes the flowchart shown in Fig. 3.

In step S10, the central brain 120 acquires the sensor information including road information detected by the sensor. Then, the central brain 120 proceeds to step S11. The processing of step S10 is an example of the function of the acquisition unit.

In step S11, the central brain 120 calculates 16 control variables described above based on the sensor information acquired in step S10. Then, the central brain 120 proceeds to step S12. The processing of step S11 is an example of the functions of the setting unit and the calculation unit.

In step S12, the central brain 120 controls the autonomous driving based on the control variables calculated in step S11. Then, the central brain 120 ends the processing of the flowchart. The processing of step S12 is an example of the function of the control unit.

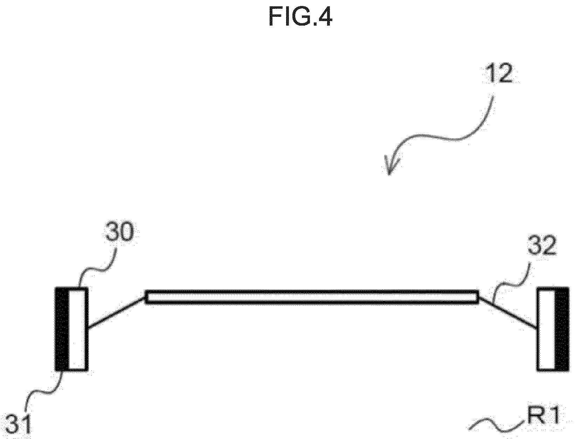

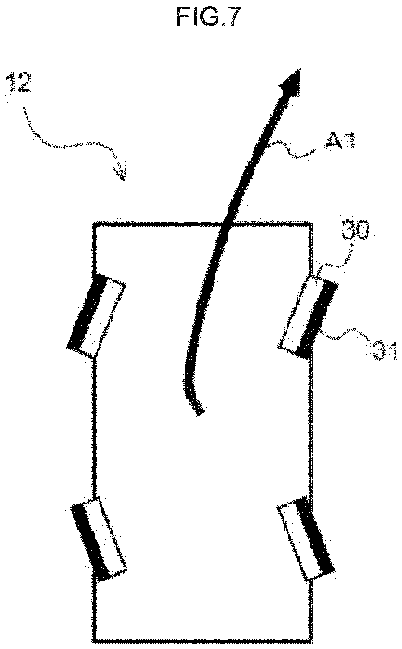

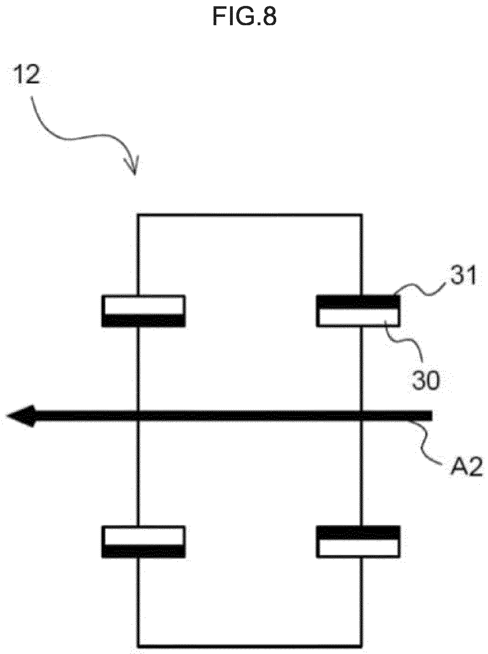

Figs. 4 to 8 are explanatory diagrams for describing an example of the autonomous driving control by the central brain 120. Figs. 4 to 6 are explanatory diagrams when the vehicle 12 is viewed from the front, and Figs. 7 and 8 are explanatory diagrams when the vehicle 12 is viewed from below.

Fig. 4 shows a case where the vehicle 12 is traveling on a flat road R1. The central brain 120 controls in-wheel motors 31 respectively mounted on four wheels 30 based on 16 control variables calculated for the road R1. As a result, the autonomous driving is performed by controlling a wheel and an inclination of each of the four wheels 30 and a suspensions 32 supporting each of the four wheels 30.

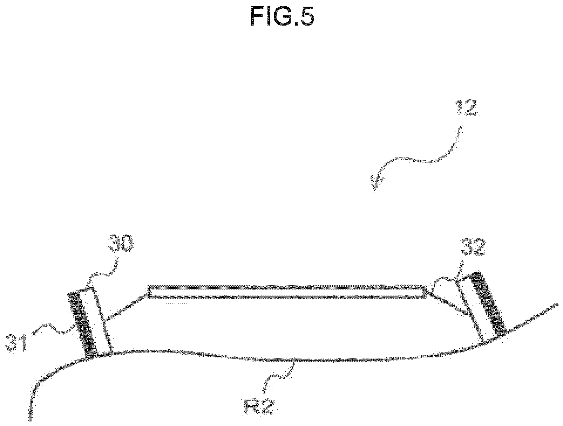

Fig. 5 shows a case where the vehicle 12 is traveling on a mountain road R2. The central brain 120 controls the in-wheel motors 31 respectively mounted on the four wheels 30 based on 16 control variables calculated for the mountain road R2. As a result, the autonomous driving is performed by controlling the wheel speed and the inclination of each of the four wheels 30 and the suspensions 32 supporting each of the four wheels 30.

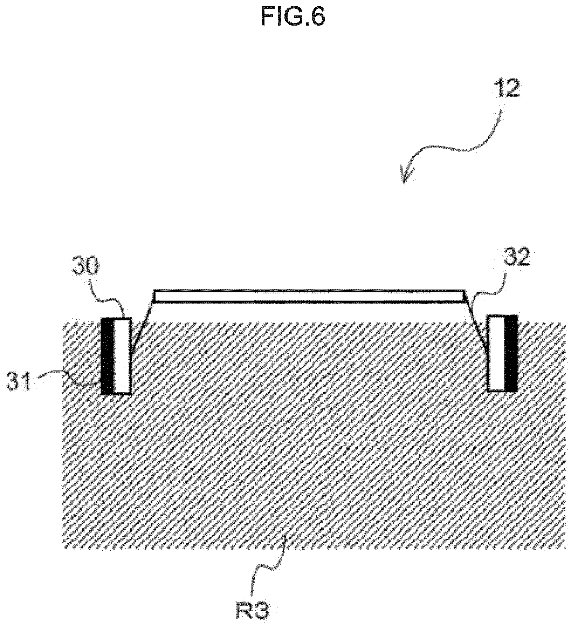

Fig. 6 shows a case where the vehicle 12 is traveling in a puddle R3. The central brain 120 controls the in-wheel motors 31 respectively mounted on the four wheels 30 based on 16 control variables calculated for the puddle R3. As a result, the autonomous driving is performed by controlling the wheel speed and the inclination of each of the four wheels 30 and the suspensions 32 supporting each of the four wheels 30.

Fig. 7 shows a case where the vehicle 12 makes a curve in a direction indicated by an arrow A1. The central brain 120 controls the in-wheel motors 31 respectively mounted on the four wheels 30 based on 16 control variables described above calculated for a curved road into which the vehicle 12 enters, thereby controlling the wheel speed and the inclination of each of the four wheels 30 and the suspension 32 (not shown) supporting each of the four wheels 30 to perform the autonomous driving.

Fig. 8 shows a case where the vehicle 12 makes parallel movement in a direction indicated by an arrow A2. The central brain 120 controls the in-wheel motors 31 respectively mounted on the four wheels 30 based on 16 control variables described above calculated for the parallel movement in the direction indicated by the arrow A2, thereby controlling the wheel speed and the inclination of each of the four wheels 30 and the suspension 32 (not shown) supporting each of the four wheels 30 to perform the autonomous driving.

States (inclinations) of the wheel 30 and the suspension 32 shown in Figs. 4 to 8 are merely examples, and it goes without saying that the states of the wheel 30 and the suspension 32 can be different from the states shown in the respective figures.

Here, an in-wheel motor mounted on a vehicle according to the related art can independently control each drive wheel, but in such a vehicle, it is not possible to control the in-wheel motor by analyzing a road condition or the like. Therefore, in the vehicle, for example, appropriate autonomous driving based on the road condition or the like cannot be performed in the case of traveling on a mountain road, a puddle, or the like.

However, in the vehicle 12 according to the embodiment, it is possible to perform the autonomous driving in which a speed, a steering angle, and the like are controlled so as to be suitable for an environment such as a road condition based on the configuration described above.

As described above, it is possible to perform the autonomous driving by controlling behavior of the vehicle 12 based on the control variables.

Meanwhile, an obstacle may approach the vehicle during traveling of the vehicle. In this case, the vehicle preferably travels while changing behavior of the vehicle in order to avoid a contact with or a collision with the obstacle. Examples of the obstacle include a vehicle other than the own vehicle that is traveling, a wall surface, a guard rail, a curbstone, and other installed objects. In the following description, a case where another vehicle approaching the vehicle 12 is applied as an example of the obstacle will be described. The obstacle is an example of a target.

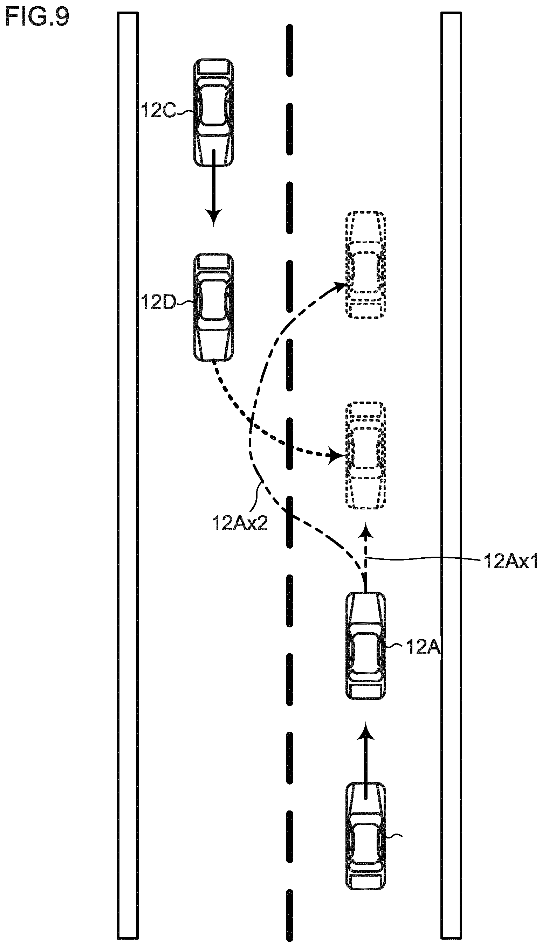

Fig. 9 is a diagram schematically showing a state in which other vehicles 12B, 12C, and 12D are traveling around an own vehicle 12A, the own vehicle 12A being the vehicle 12 traveling on a road with two opposite lanes. In the example of the figure, the other vehicle 12D is traveling following the own vehicle 12A, the other vehicle 12D is traveling ahead in the opposite lane, and the other vehicle 12C is traveling following the other vehicle 12D.

The central brain 120 of the own vehicle 12A controls the in-wheel motors 31 respectively mounted on the four wheels 30 based on the control variables described above calculated for a state of traveling on a traveling path that changes from moment to moment. As a result, the autonomous driving is performed by controlling the wheel speed and the inclination of each of the four wheels 30 and the suspensions 32 supporting each of the four wheels 30. In addition, the central brain 120 detects behaviors of the other vehicles 12B, 12C, and 12D around the own vehicle 12A by sensors and acquires the behaviors as the sensor information.

As shown in Fig. 9, in a case where the other vehicle 12D enters the traveling path of the own vehicle 12A, the above-described setting unit of the central brain 120 sets the traveling strategy from the current position to the destination according to the situation around the own vehicle 12A obtained from the sensor information in order to travel while avoiding at least the obstacle. The example shown in Fig. 9 is an example in which the own vehicle 12A collides with the entering other vehicle 12D in a traveling pattern 12Ax1 in which the own vehicle 12A is traveling in a current traveling state. Therefore, the central brain 120 sets, for example, a traveling pattern 12Ax2 for avoiding the collision with the other vehicle 12D.

The traveling pattern is set by selecting a traveling pattern that can avoid the collision with the other vehicle 12D from among a plurality of predetermined different traveling patterns. Specifically, it is sufficient if a traveling pattern in which the other vehicle 12D is not present on the traveling pattern is selected. The plurality of traveling patterns may be stored in advance in a memory. As the traveling pattern, a path in which a trajectory of the vehicle is recorded can be applied.

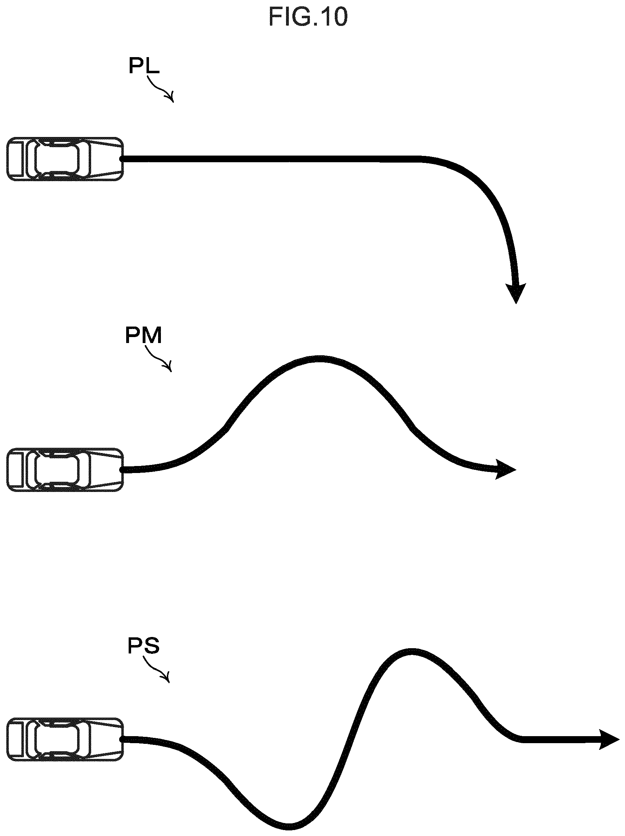

Fig. 10 is a diagram showing an example of the plurality of different traveling patterns. The example shown in Fig. 10 shows a traveling pattern PL having one curve like an L-shaped turn, a traveling pattern PM having three curves like an M-shaped turn, and a traveling pattern PS having four curves like an S-shaped turn. It is sufficient if 10 types of modifications may be associated with each pattern, and one traveling pattern that can avoid the collision with the other vehicle 12D may be selected from a total of 30 types.

In addition, the central brain 120 only needs to have a function of predicting a position of a collision including a contact with the obstacle for the own vehicle from the acquired sensor information in order to travel while avoiding at least the obstacle. Therefore, the central brain 120 sets a traveling pattern that can avoid another vehicle at the predicted position. Then, a control variable corresponding to the traveling pattern is calculated. As the control variable, it is possible to calculate a control variable that can be controlled to a traveling state along the traveling pattern that can avoid another vehicle by changing at least one of acceleration/deceleration and a steering angle in time series according to a current speed of the own vehicle 12A.

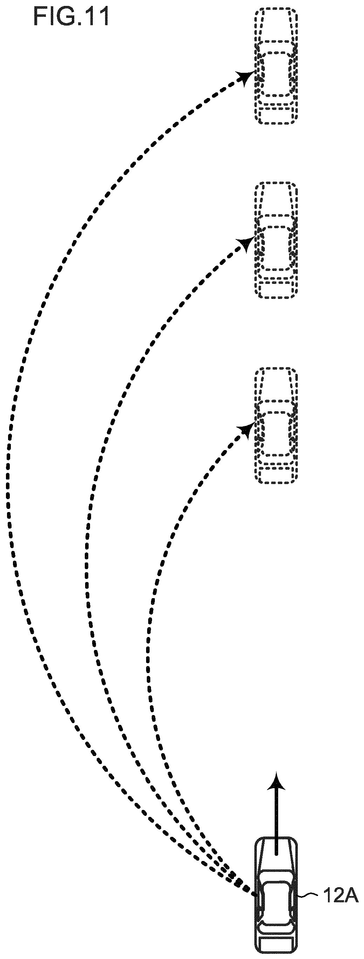

For example, as shown in Fig. 11, even in the case of the same traveling pattern, a shape of the traveling pattern can be changed by changing a gain (the degree of amplification) of a part of the traveling pattern. Therefore, the control variable includes calculating the degree of amplification of the control variable for matching with the calculated traveling pattern. As the control variable, at least one of a steering angle of the vehicle and a speed of the vehicle can be applied.

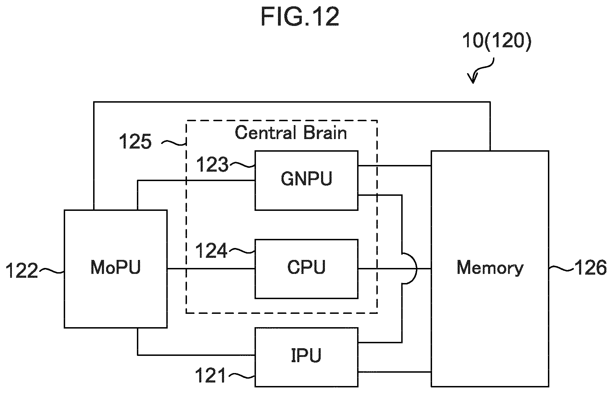

The central brain 120 that can implement the above-described autonomous driving will be further described. The central brain 120 is implemented as an information processing apparatus 10 shown in Fig. 12. The central brain 120 described above is a processing apparatus in a broad sense that functions as an information processing apparatus including a gateway, and a central brain 125 described below is a processing apparatus in a narrow sense in a case where functions are classified for each processor.

Fig. 12 is a block diagram showing an example of a configuration of the information processing apparatus 10 including the central brain according to the embodiment. The information processing apparatus 10 includes an image processing unit (IPU) 121, a motion processing unit (MoPU) 122, the central brain 125, and a memory 126. The central brain 125 includes a graphics neural network processing unit (GNPU) 123 and a central processing unit (CPU) 124.

The IPU 121 can be embedded in an ultra-high-resolution camera (not shown) installed in the vehicle. The IPU 121 executes predetermined image processing such as Bayer conversion, demosaicing, noise removal, and sharpening on an image of an object present around the vehicle, and outputs the processed image of the object at a frame rate of, for example, 10 frames/second and a resolution of 12 million pixels. The image output from the IPU 121 is supplied to the central brain 125 and the memory 126.

The MoPU 122 can be built in a low-resolution camera different from the ultra-high-resolution camera installed in the vehicle. The MoPU 122 outputs motion information indicating a motion of an imaged object at a frame rate of 1920 frames/second, for example. That is, the frame rate of the output of the MoPU 122 is 100 times the frame rate of the output of the IPU 121. The MoPU 122 outputs, as the motion information, vector information of a motion of a point indicating an existence position of the object along a predetermined coordinate axis. That is, the motion information output from the MoPU 122 does not include information necessary for identifying what the imaged object is (for example, whether the imaged object is a person or an obstacle), and includes only information indicating a motion (a movement direction and a movement speed) of a center point (or a center-of-gravity point) of the object on a coordinate axis (an x axis, a y axis, or a z axis). The image output from the MoPU 122 is supplied to the central brain 125 and the memory 126. Since the motion information does not include image information, the amount of information to be transferred to the central brain 125 and the memory 126 can be reduced.

The disclosure includes a first processor that outputs an image of an imaged object at a first frame rate, and a second processor that outputs motion information indicating a motion of the imaged object at a second frame rate higher than the first frame rate. That is, in the disclosure, the detection unit that images the surroundings of the vehicle at the first cycle as a cycle for detecting the situation around the vehicle is an example of the "first processor", and the IPU 121 is an example of the "first processor". The detection unit including the sensor that detects the situation around the vehicle at the second cycle shorter than the first cycle according to the disclosure is an example of the "second processor", and the MoPU 122 is an example of the "second processor".

The central brain 125 performs the driving control of the vehicle based on the image output from the IPU 121 and the motion information output from the MoPU 122. For example, the central brain 125 recognizes the object (a person, an animal, a road, a signal, a sign, a pedestrian crossing, an obstacle, a building, or the like) present around the vehicle based on the image output from the IPU 121. Furthermore, the central brain 125 recognizes the motion of the recognized object present around the vehicle based on the motion information output from the MoPU 122. The central brain 125 performs, for example, control (speed control) of a motor for driving wheels, brake control, and steering wheel control based on the recognized information. In the central brain 125, the GNPU 123 may execute processing related to image recognition, and the CPU 124 may execute processing related to the vehicle control.

In general, the ultra-high-resolution camera is used to perform image recognition in autonomous driving. It is possible to recognize what an object included in an image is from the image captured by the high-resolution camera. However, it is not sufficient for the autonomous driving of Level 6. For Level 6, it is also necessary to recognize a motion of an object. As the motion of the object is recognized, for example, an avoidance operation in which the vehicle traveling by the autonomous driving avoids the obstacle can be performed with higher accuracy. However, the high-resolution camera can acquire only about 10 frames per second, and it is difficult to analyze the motion of the object. On the other hand, the camera on which the MoPU 122 is mounted has a low resolution, but can perform outputting at a high frame rate of 1920 frames/second, for example.

Therefore, in the technology of the disclosure, two independent processors of the IPU 121 and the MoPU 122 are used. The high-resolution camera (IPU 121) is responsible for acquiring the image information necessary for recognizing what the imaged object is, and the MoPU 122 is responsible for detecting the motion of the object. The MoPU 122 represents the object as a point, and analyzes in which direction on the x axis, the y axis, and the z axis and at what speed the coordinates of the point move. Since detection of the entire contour of the object and what the object is can be performed using the image acquired from the high-resolution camera, the MoPU 122 can grasp behavior of the entire object as long as the MoPU 122 knows how the center point of the object moves.

According to a method of analyzing only the movement and the speed of the center point of the object, it is possible to greatly reduce the amount of information transferred to the cetral brain 125 and greatly reduce the amount of computation in the cetral brain 125 as compared with the case of determining how the entire image of the object moves. For example, in the case of transmitting an image of 1000 pixels $\times$ 1000 pixels to the cetral brain 15 at a frame rate of 1920 frames/second, when color information is included, data of 4 billion bits/second is transmitted to the cetral brain 125.

Since the MoPU 122 transmits only the motion information indicating the motion of the center point of the object, the amount of data transferred to the cetral brain 125 can be compressed to 20000 bits/second. That is, the amount of data transferred to the cetral brain 125 is compressed to 1/200000.

It is possible to implement object recognition including the motion of the object with a small amount of data by using the low-frame-rate and high-resolution image output from the IPU 121 and the high-frame-rate and lightweight motion information output from the MoPU 122 in combination as described above.

In a case where one MoPU 122 is used, it is possible to acquire the vector information of the motion of the point indicating the existence position of the object along each of two coordinate axes (the x axis and the y axis) in a three-dimensional orthogonal coordinate system. Two MoPUs 122 may be used to output the vector information of the motion of the point indicating the existence position of the object along each of three coordinate axes (the x axis, the y axis, and the z axis) in the three-dimensional orthogonal coordinate system by using the principle of a stereo camera. The z axis is an axis along a depth method (traveling of the vehicle).

In the present embodiment, the situation around the vehicle can be detected as the sensor information at the second cycle shorter than the first cycle at which the surroundings of the vehicle are imaged by a camera or the like, as the cycle for detecting the situation around the vehicle 12. That is, at Level 5 described above, for example, the situation of the surroundings can be detected twice in 0.3 seconds by the camera or the like, but in the embodiment, the situation of the surroundings can be detected 576 times at Level 6, for example. Then, the index value and the control variable can be calculated every 576 times of detection of the situation of the surroundings, and the behavior of the vehicle can be controlled such that the vehicle can travel faster and safer than the autonomous driving executed at Level 5.

There may be a plurality of traveling patterns in order for the own vehicle 12A to travel while avoiding at least the other vehicle 12D. Therefore, in the embodiment, the central brain 120 can determine an optimal traveling pattern from among the plurality of traveling patterns and set the optimal traveling pattern as the traveling strategy.

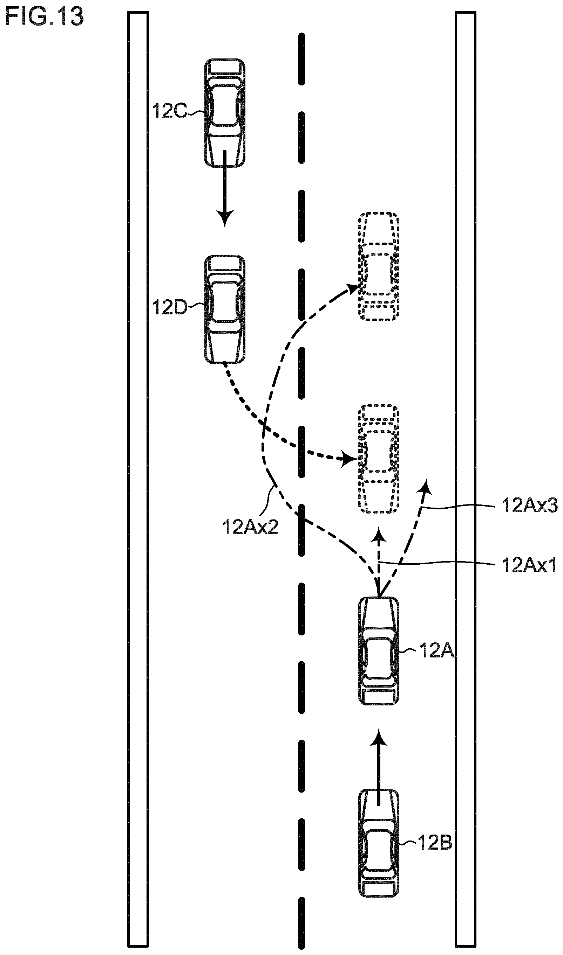

Fig. 13 is a diagram schematically showing a traveling pattern applicable to the own vehicle 12A in a traveling state between the own vehicle 12A and the other vehicles 12B, 12C, and 12D shown in Fig. 9.

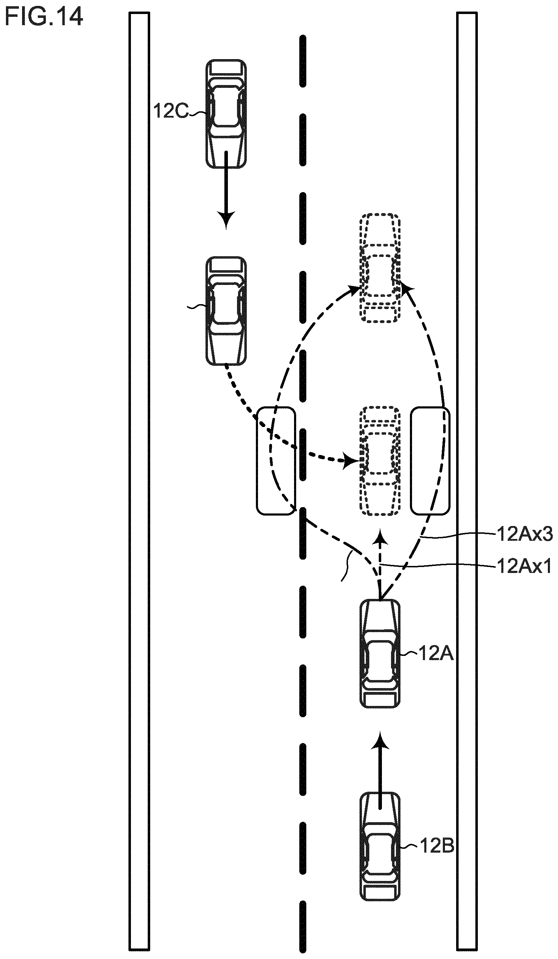

In the example shown in Fig. 13, the own vehicle 12A collides with the other vehicle 12D in the traveling pattern 12Ax1 that is a path of the own vehicle 12A. On the other hand, the own vehicle 12A can avoid the collision including the contact with the other vehicle 12D in the traveling patterns 12Ax2 and 12Ax3. Therefore, the central brain 120 calculates each of the traveling patterns 12Ax2 and 12Ax3 and sets any one of the traveling patterns 12Ax2 and 12Ax3 as the traveling pattern. In the setting of the traveling pattern, a traveling pattern in which a risk in a mutual relationship between the own vehicle 12A and the other vehicle 12D is minimized is set. Specifically, as shown in Fig. 14, the traveling pattern 12Ax2 that maximizes a distance between the own vehicle 12A and the other vehicle 12D is set. That is, the traveling pattern 12Ax2 in which a size of a space between the vehicle and the other vehicle as the obstacle in a plurality of different traveling patterns exceeds a predetermined value (for example, a maximum value) is set.

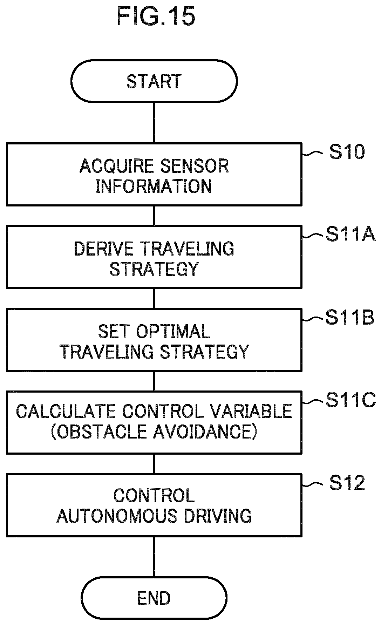

Fig. 15 is a flowchart showing an example of a flow of processing in the central brain 120 that enables the own vehicle 12A described above to travel while avoiding the other vehicle 12D.

In Fig. 15, the processing of step S11 shown in Fig. 3 is executed instead of steps S11A, S11B, and S11C. The central brain 120 can repeatedly execute the processing shown in Fig. 15 instead of the processing shown in Fig. 3.

In step S11A, the central brain 120 derives traveling strategies of the vehicle 12 based on the sensor information. Then, in step S11B, an optimal traveling strategy (traveling pattern) is set from among the derived traveling strategies. Then, in step S11C, a control variable corresponding to the traveling strategy (traveling pattern) set so as to enable traveling while avoiding an obstacle (for example, the other vehicle 12D) is calculated. The processing of steps S11A to S11C is an example of the function of the calculation unit, and the processing of steps S11A and S11B is an example of the function of the setting unit.

The traveling strategy (traveling pattern) described above can also change the traveling pattern according to the situation around the vehicle that changes from moment to moment. For example, the traveling strategy (traveling pattern) may include a timing of changing the behavior of the vehicle such as the speed of the vehicle affecting the control variable. The control variable may include the above-described timing.

The control variable related to the speed of the vehicle 12 may be selected by applying a total of 30 patterns by setting 10 patterns for each of large, medium, and small (L, M, and S) for an acceleration side, and applying a total of 30 patterns by setting 10 patterns for each of large, medium, and small (L, M, and S) for a deceleration side. In this case, the relationship between the own vehicle and another vehicle changes from moment to moment, and in a state in which the own vehicle and the another vehicle approach each other, a distance between the own vehicle and the another vehicle decreases. Therefore, options for selecting the patterns are reduced from moment to moment, a processing time for the selection can be reduced, and adjustment of a delta difference is reduced.

Although a case where the other vehicle 12D is applied as the another vehicle for the own vehicle 12A has been described above, the control variable for reducing a collision risk with respect to the another vehicle as the target may be calculated for at least one of the other vehicles 12B, 12C, and 12D around the own vehicle 12A described above and all the other vehicles.

Therefore, the central brain 120 controls the in-wheel motors 31 respectively mounted on the four wheels 30, for example, based on the control variables calculated according to the prediction of the collision including the contact. As a result, it is possible to perform the autonomous driving while avoiding the collision or reducing damage of the vehicle at the time of the collision by controlling the wheel speed and the inclination of each of the four wheels 30 and the suspension 32 supporting each of the four wheels 30.


[Second Embodiment]


[Notification (1)]


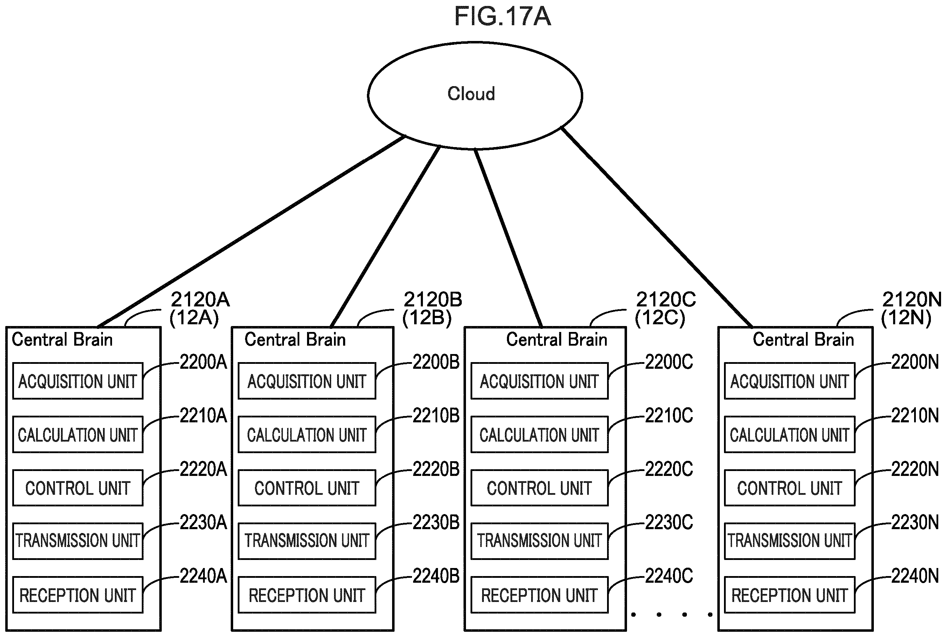

Fig. 17A is a block diagram for describing a functional configuration of a central brain 2120. For example, a central brain 2120A is a central brain of a vehicle 12A, and an alphabetical character at the end of a reference numeral represents a corresponding vehicle. Hereinafter, in a case where there is no need to distinguish, the alphabetical character at the end is omitted. In addition, the alphabetic character at the end is used to distinguish vehicles and central brains for the sake of description, but does not specify the vehicles and the central brains in practice. For example, the vehicle 12A may be any of vehicles 12B to 12N.

As described above with reference to Figs. 1 and 2, the central brains 2120A to 2120N can transmit and receive data to and from each other via a cloud. As an example, as shown in Fig. 17A, the central brain 2120 of the vehicle 12 functions as an acquisition unit 2200, a calculation unit 2210, a control unit 2220, a transmission unit 2230, and a reception unit 2240. The acquisition unit 2200 of the vehicle 12 acquires sensor information including road information, a cruising state of a surrounding vehicle, and the like from a sensor mounted on the vehicle 12.

The calculation unit 2210 calculates a total of 16 control variables for controlling a wheel speed and an inclination of each of four wheels of the vehicle 12 and a suspension supporting the wheels by using the sensor information of the vehicle 12. The control unit 2220 controls autonomous driving of the vehicle 12 based on the control variables calculated by the calculation unit 2210.

In a case where it is determined that the vehicle 12 performs emergency behavior of avoiding an obstacle (performs emergency avoidance), the control unit 2220 transmits the control variables of the vehicle 12 to another vehicle 12 via the transmission unit 2230. The emergency behavior may be, for example, behavior in which the vehicle moves while deviating from a current traveling direction by a predetermined distance or more within a predetermined time. In addition, the emergency behavior may be behavior of performing acceleration/deceleration at or beyond a predetermined level within a predetermined time.

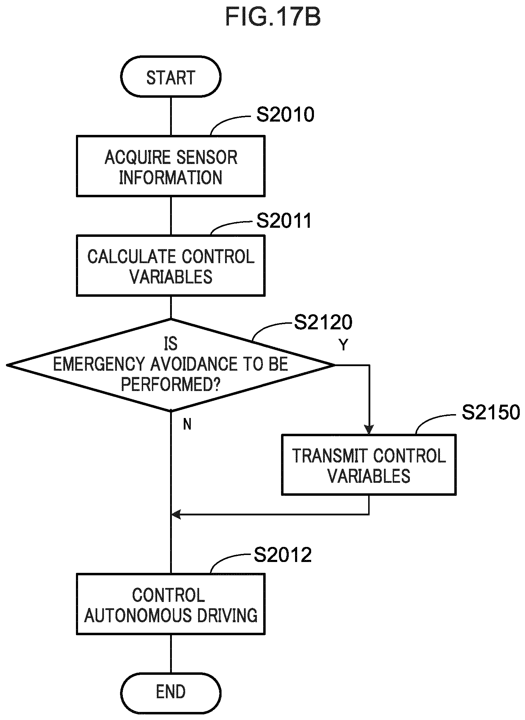

The another vehicle 12 receives the transmitted control variables via a reception unit 2240. The calculation unit 2210 of the another vehicle 12 calculates control variables of the another vehicle 12 by using the control variables of the vehicle 12 in addition to the sensor information acquired by the acquisition unit 2200. The central brain 2120A of the vehicle 12A repeatedly executes the flowchart shown in Fig. 17B. The processing of the flowchart of Fig. 17B may be substantially similar to the processing of the flowchart of Fig. 3 except for steps S2120 and S2150.

In step S2010, the central brain 2120A acquires the sensor information detected by the sensor. In step S2011, the central brain 2120A calculates a total of 16 control variables based on the sensor information acquired in step S2010.

In step S2120, the central brain 2120A determines whether or not the vehicle 12A is to perform the emergency behavior of avoiding an obstacle (perform the emergency avoidance) based on the sensor information and/or the calculated control variables. In a case where a negative determination is made in step S2120, the central brain 2120A proceeds to step S2012.

In a case where an affirmative determination is made in step S2120, the central brain 2120A transmits the calculated control variables to the central brain 2120D of the other vehicle 12D in step S2150. In step S2012, the central brain 2120 controls the autonomous driving based on the control variable calculated in step S2011, and ends the processing of the flowchart. The central brain 2120D of the vehicle 12D calculates the control variables of the vehicle 12D by using the control variables of the vehicle 12A in addition to the sensor information acquired by the vehicle 12D.

As described above, in the case of performing the emergency behavior of avoiding an obstacle (performing the emergency avoidance), the vehicle 12 transmits the control variables of the vehicle 12 to another vehicle 12, thereby notifying the another vehicle 12 in advance that the emergency behavior of the vehicle 12 that is difficult for the another vehicle 12 to predict is to be performed. As a result, the another vehicle 12 can sense the emergency behavior of the vehicle 12 before the emergency behavior of the vehicle 12 is detected by the sensor or the like after the behavior is performed, and can more quickly cope with the emergency behavior of the vehicle 12. Furthermore, it is possible to calculate the control variables of another vehicle 12 more appropriate for accident prevention by using the control variables of the vehicle 12 for calculation of the control variables of the another vehicle 12.

The above description is an example, and the vehicle 12 may transmit an emergency avoidance signal indicating that the vehicle 12 is to perform the emergency behavior of avoiding an obstacle (performs emergency avoidance) to another vehicle 12 instead of transmitting the control variables of the vehicle 12 to the another vehicle 12. The another vehicle 12 that has received the emergency avoidance signal calculates the control variables of the another vehicle 12 by using the sensor information acquired by the another vehicle 12 in response to the emergency avoidance signal, for example. For example, the another vehicle 12 may estimate an emergency avoidance signal transmission time point based on information such as an inter-vehicle distance, and calculate the control variables of the another vehicle 12 by focusing on the sensor information regarding the vehicle 12 at the estimated emergency avoidance signal transmission time point. Although an example in which the vehicle 12A transmits the control variables to the vehicle 12D has been described in order to facilitate the description, the present embodiment is not limited to the above description. For example, the vehicle 12A may transmit the control variables to a plurality of vehicles 12 present within a predetermined distance from the vehicle 12A or a vehicle 12 having a predetermined positional relationship with the vehicle 12A (a vehicle 12 present on a front side, a rear side, a left side, or a right side of the vehicle 12A).

[Hardware (1)]

The central brain 2120 that can implement the above-described autonomous driving will be further described. The central brain 2120 is implemented as an information processing apparatus 10 shown in Fig. 12. The central brain 2120 described above is a processing apparatus in a broad sense that functions as an information processing apparatus including a gateway, and a central brain 125 described below is a processing apparatus in a narrow sense in a case where functions are classified for each processor.

Fig. 12 is a block diagram showing an example of a configuration of the information processing apparatus 10 including the central brain according to the embodiment. The information processing apparatus 10 includes an image processing unit (IPU) 121, a motion processing unit (MoPU) 122, the central brain 125, and a memory 126. The central brain 125 includes a graphics neural network processing unit (GNPU) 123 and a central processing unit (CPU) 124.

The IPU 121 can be embedded in an ultra-high-resolution camera (not shown) installed in the vehicle. The IPU 121 executes predetermined image processing such as Bayer conversion, demosaicing, noise removal, and sharpening on an image of an object present around the vehicle, and outputs the processed image of the object at a frame rate of, for example, 10 frames/second and a resolution of 12 million pixels. The image output from the IPU 121 is supplied to the central brain 125 and the memory 126.

The MoPU 122 can be built in a low-resolution camera different from the ultra-high-resolution camera installed in the vehicle. The MoPU 122 outputs motion information indicating a motion of an imaged object at a frame rate of 1920 frames/second, for example. That is, the frame rate of the output of the MoPU 122 is 100 times the frame rate of the output of the IPU 121. The MoPU 122 outputs, as the motion information, vector information of a motion of a point indicating an existence position of the object along a predetermined coordinate axis. That is, the motion information output from the MoPU 122 does not include information necessary for identifying what the imaged object is (for example, whether the imaged object is a person or an obstacle), and includes only information indicating a motion (a movement direction and a movement speed) of a center point (or a center-of-gravity point) of the object on a coordinate axis (an x axis, a y axis, or a z axis). The image output from the MoPU 122 is supplied to the central brain 125 and the memory 126. Since the motion information does not include image information, the amount of information to be transferred to the central brain 125 and the memory 126 can be reduced.

The disclosure includes a first processor that outputs an image of an imaged object at a first frame rate, and a second processor that outputs motion information indicating a motion of the imaged object at a second frame rate higher than the first frame rate. That is, in the disclosure, the detection unit that images the surroundings of the vehicle at the first cycle as a cycle for detecting the situation around the vehicle is an example of the "first processor", and the IPU 121 is an example of the "first processor". The detection unit including the sensor that detects the situation around the vehicle at the second cycle shorter than the first cycle according to the disclosure is an example of the "second processor", and the MoPU 122 is an example of the "second processor".

The central brain 125 performs the driving control of the vehicle based on the image output from the IPU 121 and the motion information output from the MoPU 122. For example, the central brain 125 recognizes the object (a person, an animal, a road, a signal, a sign, a pedestrian crossing, an obstacle, a building, or the like) present around the vehicle based on the image output from the IPU 121. Furthermore, the central brain 125 recognizes the motion of the recognized object present around the vehicle based on the motion information output from the MoPU 122. The central brain 125 performs, for example, control (speed control) of a motor for driving wheels, brake control, and steering wheel control based on the recognized information. In the central brain 125, the GNPU 123 may execute processing related to image recognition, and the CPU 124 may execute processing related to the vehicle control.

In general, the ultra-high-resolution camera is used to perform image recognition in autonomous driving. It is possible to recognize what an object included in an image is from the image captured by the high-resolution camera. However, it is not sufficient for the autonomous driving of Level 6. For Level 6, it is also necessary to recognize a motion of an object. As the motion of the object is recognized, for example, an avoidance operation in which the vehicle traveling by the autonomous driving avoids the obstacle can be performed with higher accuracy. However, the high-resolution camera can acquire only about 10 frames per second, and it is difficult to analyze the motion of the object. On the other hand, the camera on which the MoPU 122 is mounted has a low resolution, but can perform outputting at a high frame rate of 1920 frames/second, for example.

Therefore, in the technology of the disclosure, two independent processors of the IPU 121 and the MoPU 122 are used. The high-resolution camera (IPU 121) is responsible for acquiring the image information necessary for recognizing what the imaged object is, and the MoPU 122 is responsible for detecting the motion of the object. The MoPU 122 represents the object as a point, and analyzes in which direction on the x axis, the y axis, and the z axis and at what speed the coordinates of the point move. Since detection of the entire contour of the object and what the object is can be performed using the image acquired from the high-resolution camera, the MoPU 122 can grasp behavior of the entire object as long as the MoPU 122 knows how the center point of the object moves.

According to a method of analyzing only the movement and the speed of the center point of the object, it is possible to greatly reduce the amount of information transferred to the cetral brain 125 and greatly reduce the amount of computation in the cetral brain 125 as compared with the case of determining how the entire image of the object moves. For example, in the case of transmitting an image of 1000 pixels × 1000 pixels to the cetral brain 125 at a frame rate of 1920 frames/second, when color information is included, data of 4 billion bits/second is transmitted to the cetral brain 125. Since the MoPU 122 transmits only the motion information indicating the motion of the center point of the object, the amount of data transferred to the central brain 125 can be compressed to 20000 bits/second. That is, the amount of data transferred to the cetral brain 125 is compressed to 1/200000.

It is possible to implement object recognition including the motion of the object with a small amount of data by using the low-frame-rate and high-resolution image output from the IPU 121 and the high-frame-rate and lightweight (low-resolution) motion information output from the MoPU 122 in combination as described above.

In a case where one MoPU 122 is used, it is possible to acquire the vector information of the motion of the point indicating the existence position of the object along each of two coordinate axes (the x axis and the y axis) in a three-dimensional orthogonal coordinate system. Two MoPUs 122 may be used to output the vector information of the motion of the point indicating the existence position of the object along each of three coordinate axes (the x axis, the y axis, and the z axis) in the three-dimensional orthogonal coordinate system by using the principle of a stereo camera. The z axis is an axis along a depth method (a traveling direction of the vehicle).

In the present embodiment, the situation around the vehicle can be detected as the sensor information at the second cycle shorter than the first cycle at which the surroundings of the vehicle are imaged by a camera or the like, as the cycle for detecting the situation around the vehicle 12. That is, at Level 5 described above, for example, the situation of the surroundings can be detected twice in 0.3 seconds by the camera or the like, but in the embodiment, the situation of the surroundings can be detected 576 times at Level 6, for example. Then, an index value and the control variable can be calculated every 576 times of detection of the situation of the surroundings, and the behavior of the vehicle can be controlled such that the vehicle can travel faster and safer than the autonomous driving executed at Level 5.

[Avoidance (2)]

There may be a plurality of traveling patterns in order for the own vehicle 12A to travel while avoiding at least the other vehicle 12D. Therefore, in the embodiment, the central brain 2120 can determine an optimal traveling pattern from among the plurality of traveling patterns and set the optimal traveling pattern as a traveling strategy.

Fig. 13 is a diagram schematically showing a traveling pattern applicable to the own vehicle 12A in a traveling state between the own vehicle 12A and the other vehicles 12B, 12C, and 12D shown in Fig. 9.

In the example shown in Fig. 13, the own vehicle 12A collides with the other vehicle 12D in the traveling pattern 12Ax1 that is a path of the own vehicle 12A. On the other hand, the own vehicle 12A can avoid the collision including the contact with the other vehicle 12D in the traveling patterns 12Ax2 and 12Ax3. Therefore, the central brain 2120 calculates each of the traveling patterns 12Ax2 and 12Ax3 and sets any one of the traveling patterns 12Ax2 and 12Ax3 as the traveling pattern. In the setting of the traveling pattern, a traveling pattern in which a risk in a mutual relationship between the own vehicle 12A and the other vehicle 12D is minimized is set. Specifically, as shown in Fig. 14, the traveling pattern 12Ax2 that maximizes a distance between the own vehicle 12A and the other vehicle 12D is set. That is, the traveling pattern 12Ax2 in which a size of a space between the vehicle and the other vehicle as the obstacle in a plurality of different traveling patterns exceeds a predetermined value (for example, the size has a maximum value) is set.

Fig. 15 is a flowchart showing an example of a flow of processing in the central brain 2120 that enables the own vehicle 12A described above to travel while avoiding the other vehicle 12D. In Fig. 15, the processing of step S11 shown in Fig. 3 is executed instead of steps S2011A, S2011B, and S2011C. The central brain 2120 can repeatedly execute the processing shown in Fig. 15 instead of the processing shown in Fig. 3.

In step S2011A, the central brain 2120 derives traveling strategies of the vehicle 12 based on the sensor information. Then, in step S2011B, an optimal traveling strategy (traveling pattern) is set from among the derived traveling strategies. Then, in step S2011C, a control variable corresponding to the traveling strategy (traveling pattern) set so as to enable traveling while avoiding an obstacle (for example, the other vehicle 12D) is calculated. The processing of steps S2011A to S2011C is an example of the function of the calculation unit, and the processing of steps S2011A and S2011B is an example of the function of the setting unit.

The traveling strategy (traveling pattern) described above can also change the traveling pattern according to the situation around the vehicle that changes from moment to moment. For example, the traveling strategy (traveling pattern) may include a timing of changing the behavior of the vehicle such as the speed of the vehicle affecting the control variable. The control variable may include the above-described timing.

The control variable related to the speed of the vehicle 12 may be selected by applying a total of 30 patterns by setting 10 patterns for each of large, medium, and small (L, M, and S) for an acceleration side, and applying a total of 30 patterns by setting 10 patterns for each of large, medium, and small (L, M, and S) for a deceleration side. In this case, the relationship between the own vehicle and another vehicle changes from moment to moment, and in a state in which the own vehicle and the another vehicle approach each other, a distance between the own vehicle and the another vehicle decreases. Therefore, options for selecting the patterns are reduced from moment to moment, a processing time for the selection can be reduced, and adjustment of a delta difference is reduced.

Although a case where the other vehicle 12D is applied as the another vehicle for the own vehicle 12A has been described above, the control variable for reducing a collision risk with respect to the another vehicle as the target may be calculated for at least one of the other vehicles 12B, 12C, and 12D around the own vehicle 12A described above and all the other vehicles.

Therefore, the central brain 2120 controls in-wheel motors 31 respectively mounted on four wheels 30, for example, based on the control variables calculated according to the prediction of the collision including the contact. As a result, it is possible to perform the autonomous driving while avoiding the collision or reducing damage of the vehicle at the time of the collision by controlling the wheel speed and the inclination of each of the four wheels 30 and the suspension 32 supporting each of the four wheels 30.

[Notification (2)]

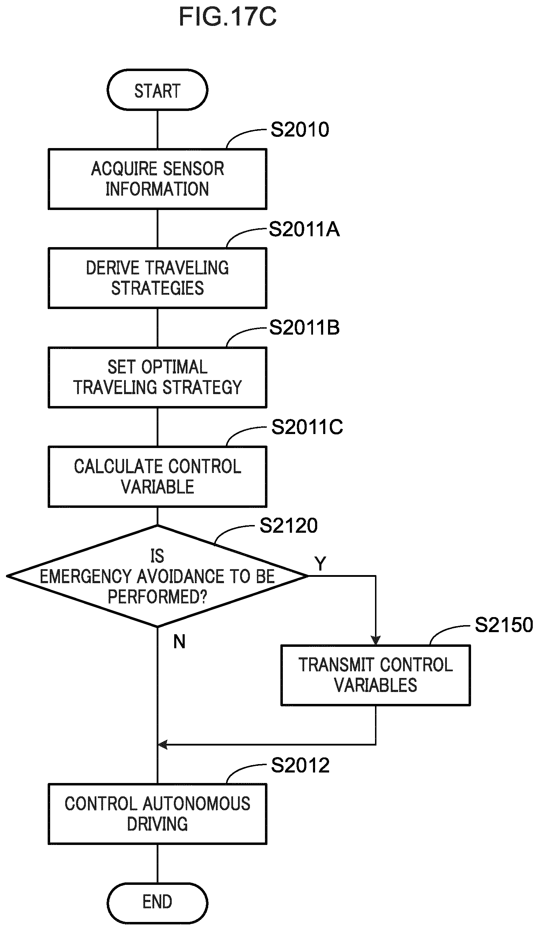

The central brain 2120A of the vehicle 12A repeatedly executes the flowchart shown in Fig. 17C. The processing of the flowchart of Fig. 17C may be substantially similar to the processing of the flowchart of Fig. 17B except for steps S2120 and S2150. A functional configuration of the central brain 2120 is as shown in Fig. 17A.

In step S2010, the central brain 2120A acquires the sensor information detected by the sensor. In step S2011A, the central brain 2120A derives traveling strategies of the vehicle 12A based on the sensor information acquired in step S2010. In step S2011B, the central brain 2120A sets an optimal traveling strategy (traveling pattern) from among the derived traveling strategies.

In step S2011C, the central brain 2120A calculates a total of 16 control variables according to the traveling strategy (traveling pattern) set so as to enable traveling while avoiding an obstacle. In step S2120, the central brain 2120A determines whether or not the vehicle 12A is to perform the emergency behavior of avoiding an obstacle (perform the emergency avoidance) based on the sensor information and/or the calculated control variables. In a case where a negative determination is made in step S2120, the central brain 2120A proceeds to step S2012.

In a case where an affirmative determination is made in step S2120, the central brain 2120A transmits the calculated control variables to the central brain 2120D of the vehicle 12D in step S2150.

In step S2012, the central brain 2120A controls the autonomous driving based on the control variables calculated in step S2011C, and ends the processing of the flowchart. The central brain 2120D of the vehicle 12D calculates the control variables of the vehicle 12D by using the control variables of the vehicle 12A in addition to the sensor information acquired by the vehicle 12D.

As described above, in the case of performing the emergency behavior of avoiding an obstacle (performing the emergency avoidance), the vehicle 12 transmits the control variables of the vehicle 12 to another vehicle 12, thereby notifying the another vehicle 12 in advance that the emergency behavior of the vehicle 12 that is difficult for the another vehicle 12 to predict is to be performed. As a result, the another vehicle 12 can sense the emergency behavior of the vehicle 12 before the emergency behavior of the vehicle 12 is detected by the sensor or the like after the behavior is performed, and can more quickly cope with the emergency behavior of the vehicle 12. Furthermore, it is possible to calculate the control variables of another vehicle 12 more appropriate for accident prevention by using the control variables of the vehicle 12 for calculation of the control variables of the another vehicle 12.

The above description is an example, and the vehicle 12 may transmit an emergency avoidance signal indicating that the vehicle 12 is to perform the emergency behavior of avoiding an obstacle (performs emergency avoidance) to another vehicle 12 instead of transmitting the control variables of the vehicle 12 to the another vehicle 12. The another vehicle 12 that has received the emergency avoidance signal calculates the control variables of the another vehicle 12 by using the sensor information acquired by the another vehicle 12 in response to the emergency avoidance signal, for example. For example, the another vehicle 12 may estimate an emergency avoidance signal transmission time point based on information such as an inter-vehicle distance, and calculate the control variables of the another vehicle 12 by focusing on the sensor information regarding the vehicle 12 at the estimated emergency avoidance signal transmission time point. Although an example in which the vehicle 12A transmits the control variables to the vehicle 12D has been described in order to facilitate the description, the present embodiment is not limited to the above description. For example, the vehicle 12A may transmit the control variables to a plurality of vehicles 12 present within a predetermined distance from the vehicle 12A or a vehicle 12 having a predetermined positional relationship with the vehicle 12A (a vehicle 12 present on a front side, a rear side, a left side, or a right side of the vehicle 12A).

[Third Embodiment]

[Notification (1)]

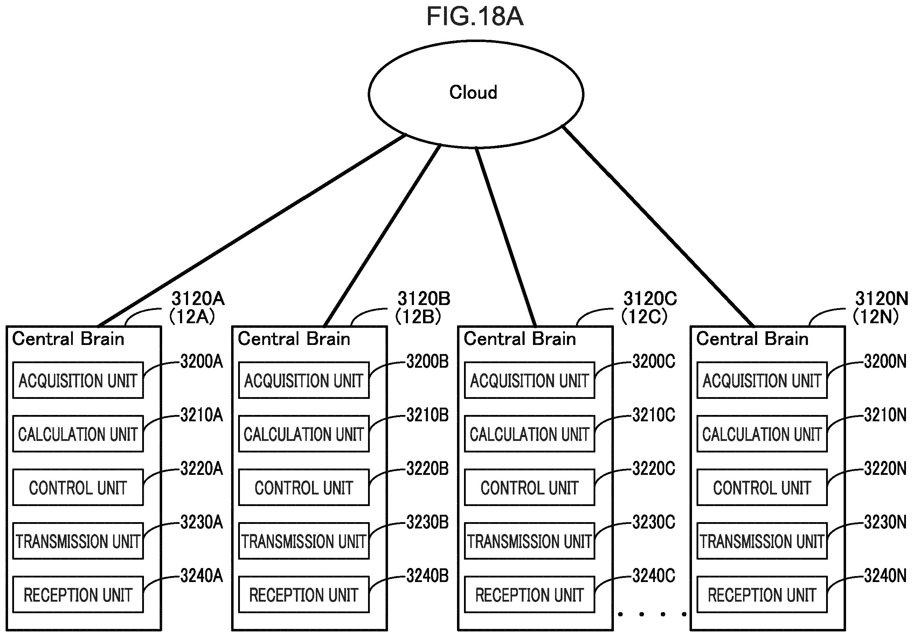

Fig. 18A is a block diagram for describing a functional configuration of a central brain 3120. For example, a central brain 3120A is a central brain of a vehicle 12A, and an alphabetical character at the end of a reference numeral represents a corresponding vehicle. Hereinafter, in a case where there is no need to distinguish, the alphabetical character at the end is omitted. In addition, the alphabetic character at the end is used to distinguish vehicles and central brains for the sake of description, but does not specify the vehicles and the central brains in practice. For example, the vehicle 12A may be any of vehicles 12B to 12N.

As described above with reference to Figs. 1 and 2, the central brains 3120A to 3120N can transmit and receive data to and from each other via a cloud. As an example, as shown in Fig. 18A, the central brain 3120 of the vehicle 12 functions as an acquisition unit 3200, a calculation unit 3210, a control unit 3220, a transmission unit 3230, and a reception unit 3240. The acquisition unit 3200 of the vehicle 12 acquires sensor information including road information, a cruising state of a surrounding vehicle, and the like from a sensor mounted on the vehicle 12.

The calculation unit 3210 calculates a total of 16 control variables for controlling a wheel speed and an inclination of each of four wheels of the vehicle 12 and a suspension supporting the wheels by using the sensor information of the vehicle 12. The control unit 3220 controls autonomous driving of the vehicle 12 based on the control variables calculated by the calculation unit 3210.

In a case where it is determined that there is a possibility that the vehicle 12 collides with another vehicle 12, the control unit 3220 receives the sensor information of the another vehicle 12 via the reception unit 3240 of the vehicle 12. For example, the vehicle 12 may transmit a transmission request signal to transmit the sensor information to the another vehicle 12, and the another vehicle 12 that has received the transmission request signal may transmit the sensor information to the vehicle 12 via the transmission unit 3230. Alternatively, each vehicle 12 may transmit the sensor information to a server every predetermined time, and the vehicle 12 may selectively receive the sensor information of the another vehicle 12 from the server.

Whether or not there is a possibility that the vehicle 12 collides with the another vehicle 12 can be determined, for example, based on the sensor information acquired by the vehicle 12 using the acquisition unit 3200. Whether or not a collision target is a vehicle can be determined based on, for example, the cruising state (including, for example, image information of the surroundings of the vehicle captured by an in-vehicle camera) of the surrounding vehicle included in the sensor information. Furthermore, the determination as to whether or not the collision target is a vehicle may be performed by, for example, the server that receives and accumulates the sensor information (including, for example, GPS information of each vehicle) of each vehicle, and the vehicle 12 may receive the determination result. It may be determined that there is a possibility that the vehicle 12 collides with the another vehicle 12 in a case where, for example, a distance between the vehicle 12 and the another vehicle 12 is equal to or less than a predetermined distance and a distance between the vehicle 12 and the another vehicle 12 is predicted to be shortened in the future.

The calculation unit 3210 of the vehicle 12 generates a control variable of the another vehicle 12 based on the received sensor information of the another vehicle 12 and the sensor information of the vehicle 12, and transmits the control variable of the another vehicle 12 to the another vehicle 12 via the transmission unit 3230. The calculation unit 3210 of the vehicle 12 may generate the control variable of the another vehicle 12 by using not only the sensor information but also the control variable of the vehicle 12 and/or the another vehicle 12. In a case where the control variable of the another vehicle 12 is also used, the vehicle 12 also receives the control variable of the another vehicle 12 via the reception unit 3240 in addition to the sensor information of the another vehicle 12.

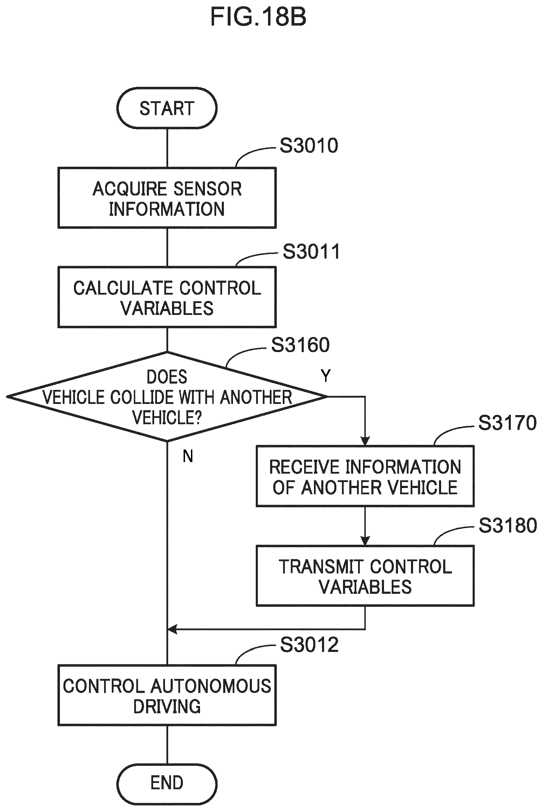

The another vehicle 12 receives the control variable transmitted from the vehicle 12 via the reception unit 3240. The control unit 3220 of the another vehicle 12 controls autonomous driving of the another vehicle 12 by using the received control variable, that is, the control variable of the another vehicle 12 calculated by the vehicle 12. The central brain 3120A of the vehicle 12A repeatedly executes the flowchart shown in Fig. 18B. The processing of the flowchart of Fig. 18B may be substantially similar to the processing of the flowchart of Fig. 3 except for steps S3160, S3170, and S3180.

In step S3010, the central brain 3120A acquires the sensor information detected by the sensor. In step S3011, the central brain 3120A calculates a total of 16 control variables based on the sensor information acquired in step S3010.

In step S3160, the central brain 3120A determines whether or not there is a possibility that the vehicle 12A collides with another vehicle such as the vehicle 12D based on the sensor information and/or the calculated control variables. In a case where a negative determination is made in step S3160, the central brain 3120A proceeds to step S3012.

In a case where an affirmative determination is made in step S3160, the central brain 3120A receives the sensor information of the other vehicle 12D in step S3170. In step S3180, the central brain 3120A calculates the control variables of the other vehicle 12D based on the sensor information of the other vehicle 12D and the sensor information of the vehicle 12A, and transmits the calculated control variables to the other vehicle 12D. In step S3012, the central brain 3120A controls the autonomous driving based on the control variables calculated in step S3011, and ends the processing of the flowchart. The central brain 3120D of the vehicle 12D controls the autonomous driving of the vehicle 12D by using the control variables received from the vehicle 12A.

As described above, in a case where there is a possibility that the vehicle 12 collides with the another vehicle 12, the vehicle 12 generates the control variable of the another vehicle 12 and transmits the control variable of the another vehicle 12 to the another vehicle 12. This enables both the vehicle 12 and the another vehicle 12 to control the autonomous driving in consideration of movements of both the vehicle 12 and the another vehicle 12. As a result, it is possible to attempt to avoid the collision between the vehicle 12 and the another vehicle 12, and it is possible to reduce mutual damage even when the vehicles 12 collide with each other.

The above description is an example. Although an example in which the vehicle 12A transmits the control variables of the vehicle 12D to the vehicle 12D has been described in order to facilitate the description, the present embodiment is not limited to the above description. For example, the vehicle 12A may calculate the control variable of each of a plurality of other vehicles 12 that may collide with the vehicle 12A, and transmit the control variable to each of the other vehicles 12.

[Hardware (1)]

The central brain 3120 that can implement the above-described autonomous driving will be further described. The central brain 3120 is implemented as an information processing apparatus 10 shown in Fig. 12. The central brain 3120 described above is a processing apparatus in a broad sense that functions as an information processing apparatus including a gateway, and a central brain 125 described below is a processing apparatus in a narrow sense in a case where functions are classified for each processor.

Fig. 12 is a block diagram showing an example of a configuration of the information processing apparatus 10 including the central brain according to the embodiment. The information processing apparatus 10 includes an image processing unit (IPU) 121, a motion processing unit (MoPU) 122, the central brain 125, and a memory 126. The central brain 125 includes a graphics neural network processing unit (GNPU) 123 and a central processing unit (CPU) 124.

The IPU 121 can be embedded in an ultra-high-resolution camera (not shown) installed in the vehicle. The IPU 121 executes predetermined image processing such as Bayer conversion, demosaicing, noise removal, and sharpening on an image of an object present around the vehicle, and outputs the processed image of the object at a frame rate of, for example, 10 frames/second and a resolution of 12 million pixels. The image output from the IPU 121 is supplied to the central brain 125 and the memory 126.

The MoPU 122 can be built in a low-resolution camera different from the ultra-high-resolution camera installed in the vehicle. The MoPU 122 outputs motion information indicating a motion of an imaged object at a frame rate of 1920 frames/second, for example. That is, the frame rate of the output of the MoPU 122 is 100 times the frame rate of the output of the IPU 121. The MoPU 122 outputs, as the motion information, vector information of a motion of a point indicating an existence position of the object along a predetermined coordinate axis. That is, the motion information output from the MoPU 122 does not include information necessary for identifying what the imaged object is (for example, whether the imaged object is a person or an obstacle), and includes only information indicating a motion (a movement direction and a movement speed) of a center point (or a center-of-gravity point) of the object on a coordinate axis (an x axis, a y axis, or a z axis). The image output from the MoPU 122 is supplied to the central brain 125 and the memory 126. Since the motion information does not include image information, the amount of information to be transferred to the central brain 125 and the memory 126 can be reduced.

The disclosure includes a first processor that outputs an image of an imaged object at a first frame rate, and a second processor that outputs motion information indicating a motion of the imaged object at a second frame rate higher than the first frame rate. That is, in the disclosure, the detection unit that images the surroundings of the vehicle at the first cycle as a cycle for detecting the situation around the vehicle is an example of the "first processor", and the IPU 121 is an example of the "first processor". The detection unit including the sensor that detects the situation around the vehicle at the second cycle shorter than the first cycle according to the disclosure is an example of the "second processor", and the MoPU 122 is an example of the "second processor".

The central brain 125 performs the driving control of the vehicle based on the image output from the IPU 121 and the motion information output from the MoPU 122. For example, the central brain 125 recognizes the object (a person, an animal, a road, a signal, a sign, a pedestrian crossing, an obstacle, a building, or the like) present around the vehicle based on the image output from the IPU 121. Furthermore, the central brain 125 recognizes the motion of the recognized object present around the vehicle based on the motion information output from the MoPU 122.

The central brain 125 performs, for example, control (speed control) of a motor for driving wheels, brake control, and steering wheel control based on the recognized information. In the central brain 125, the GNPU 123 may execute processing related to image recognition, and the CPU 124 may execute processing related to the vehicle control.

In general, the ultra-high-resolution camera is used to perform image recognition in autonomous driving. It is possible to recognize what an object included in an image is from the image captured by the high-resolution camera. However, it is not sufficient for the autonomous driving of Level 6. For Level 6, it is also necessary to recognize a motion of an object. As the motion of the object is recognized, for example, an avoidance operation in which the vehicle traveling by the autonomous driving avoids the obstacle can be performed with higher accuracy. However, the high-resolution camera can acquire only about 10 frames per second, and it is difficult to analyze the motion of the object. On the other hand, the camera on which the MoPU 122 is mounted has a low resolution, but can perform outputting at a high frame rate of 1920 frames/second, for example.

Therefore, in the technology of the disclosure, two independent processors of the IPU 121 and the MoPU 122 are used. The high-resolution camera (IPU 121) is responsible for acquiring the image information necessary for recognizing what the imaged object is, and the MoPU 122 is responsible for detecting the motion of the object. The MoPU 122 represents the object as a point, and analyzes in which direction on the x axis, the y axis, and the z axis and at what speed the coordinates of the point move. Since detection of the entire contour of the object and what the object is can be performed using the image acquired from the high-resolution camera, the MoPU 122 can grasp behavior of the entire object as long as the MoPU 122 knows how the center point of the object moves.

According to a method of analyzing only the movement and the speed of the center point of the object, it is possible to greatly reduce the amount of information transferred to the cetral brain 125 and greatly reduce the amount of computation in the cetral brain 125 as compared with the case of determining how the entire image of the object moves. For example, in the case of transmitting an image of 1000 pixels × 1000 pixels to the cetral brain 125 at a frame rate of 1920 frames/second, when color information is included, data of 4 billion bits/second is transmitted to the cetral brain 125. Since the MoPU 122 transmits only the motion information indicating the motion of the center point of the object, the amount of data transferred to the central brain 125 can be compressed to 20000 bits/second. That is, the amount of data transferred to the cetral brain 125 is compressed to 1/200000.

It is possible to implement object recognition including the motion of the object with a small amount of data by using the low-frame-rate and high-resolution image output from the IPU 121 and the high-frame-rate and lightweight (low-resolution) motion information output from the MoPU 122 in combination as described above.

In a case where one MoPU 122 is used, it is possible to acquire the vector information of the motion of the point indicating the existence position of the object along each of two coordinate axes (the x axis and the y axis) in a three-dimensional orthogonal coordinate system. Two MoPUs 122 may be used to output the vector information of the motion of the point indicating the existence position of the object along each of three coordinate axes (the x axis, the y axis, and the z axis) in the three-dimensional orthogonal coordinate system by using the principle of a stereo camera. The z axis is an axis along a depth method (a traveling direction of the vehicle).

In the present embodiment, the situation around the vehicle can be detected as the sensor information at the second cycle shorter than the first cycle at which the surroundings of the vehicle are imaged by a camera or the like, as the cycle for detecting the situation around the vehicle 12. That is, at Level 5 described above, for example, the situation of the surroundings can be detected twice in 0.3 seconds by the camera or the like, but in the embodiment, the situation of the surroundings can be detected 576 times at Level 6, for example. Then, an index value and the control variable can be calculated every 576 times of detection of the situation of the surroundings, and the behavior of the vehicle can be controlled such that the vehicle can travel faster and safer than the autonomous driving executed at Level 5.

[Avoidance (2)]

There may be a plurality of traveling patterns in order for the own vehicle 12A to travel while avoiding at least the other vehicle 12D. Therefore, in the embodiment, the central brain 3120 can determine an optimal traveling pattern from among the plurality of traveling patterns and set the optimal traveling pattern as a traveling strategy.

Fig. 13 is a diagram schematically showing a traveling pattern applicable to the own vehicle 12A in a traveling state between the own vehicle 12A and the other vehicles 12B, 12C, and 12D shown in Fig. 9.

In the example shown in Fig. 13, the own vehicle 12A collides with the other vehicle 12D in the traveling pattern 12Ax1 that is a path of the own vehicle 12A. On the other hand, the own vehicle 12A can avoid the collision including the contact with the other vehicle 12D in the traveling patterns 12Ax2 and 12Ax3. Therefore, the central brain 3120 calculates each of the traveling patterns 12Ax2 and 12Ax3 and sets any one of the traveling patterns 12Ax2 and 12Ax3 as the traveling pattern. In the setting of the traveling pattern, a traveling pattern in which a risk in a mutual relationship between the own vehicle 12A and the other vehicle 12D is minimized is set. Specifically, as shown in Fig. 14, the traveling pattern 12Ax2 that maximizes a distance between the own vehicle 12A and the other vehicle 12D is set. That is, the traveling pattern 12Ax2 in which a size of a space between the vehicle and the other vehicle as the obstacle in a plurality of different traveling patterns exceeds a predetermined value (for example, the size has a maximum value) is set.

Fig. 15 is a flowchart showing an example of a flow of processing in the central brain 3120 that enables the own vehicle 12A described above to travel while avoiding the other vehicle 12D. In Fig. 15, the processing of step S11 shown in Fig. 3 is executed instead of steps S3011A, 3011B, and 3011C. The central brain 3120 can repeatedly execute the processing shown in Fig. 15 instead of the processing shown in Fig. 3.

In step S3011A, the central brain 3120 derives traveling strategies of the vehicle 12 based on the sensor information. Then, in step S3011B, an optimal traveling strategy (traveling pattern) is set from among the derived traveling strategies. Then, in step S3011C, a control variable corresponding to the traveling strategy (traveling pattern) set so as to enable traveling while avoiding an obstacle (for example, the other vehicle 12D) is calculated. The processing of steps S3011A to S3011C is an example of the function of the calculation unit, and the processing of steps S3011A and S3011B is an example of the function of the setting unit.

The traveling strategy (traveling pattern) described above can also change the traveling pattern according to the situation around the vehicle that changes from moment to moment. For example, the traveling strategy (traveling pattern) may include a timing of changing the behavior of the vehicle such as the speed of the vehicle affecting the control variable. The control variable may include the above-described timing.

The control variable related to the speed of the vehicle 12 may be selected by applying a total of 30 patterns by setting 10 patterns for each of large, medium, and small (L, M, and S) for an acceleration side, and applying a total of 30 patterns by setting 10 patterns for each of large, medium, and small (L, M, and S) for a deceleration side. In this case, the relationship between the own vehicle and another vehicle changes from moment to moment, and in a state in which the own vehicle and the another vehicle approach each other, a distance between the own vehicle and the another vehicle decreases. Therefore, options for selecting the patterns are reduced from moment to moment, a processing time for the selection can be reduced, and adjustment of a delta difference is reduced.

Although a case where the other vehicle 12D is applied as the another vehicle for the own vehicle 12A has been described above, the control variable for reducing a collision risk with respect to the another vehicle as the target may be calculated for at least one of the other vehicles 12B, 12C, and 12D around the own vehicle 12A described above and all the other vehicles.

Therefore, the central brain 3120 controls in-wheel motors 31 respectively mounted on four wheels 30, for example, based on the control variables calculated according to the prediction of the collision including the contact. As a result, it is possible to perform the autonomous driving while avoiding the collision or reducing damage of the vehicle at the time of the collision by controlling the wheel speed and the inclination of each of the four wheels 30 and the suspension 32 supporting each of the four wheels 30.

[Notification (2)]

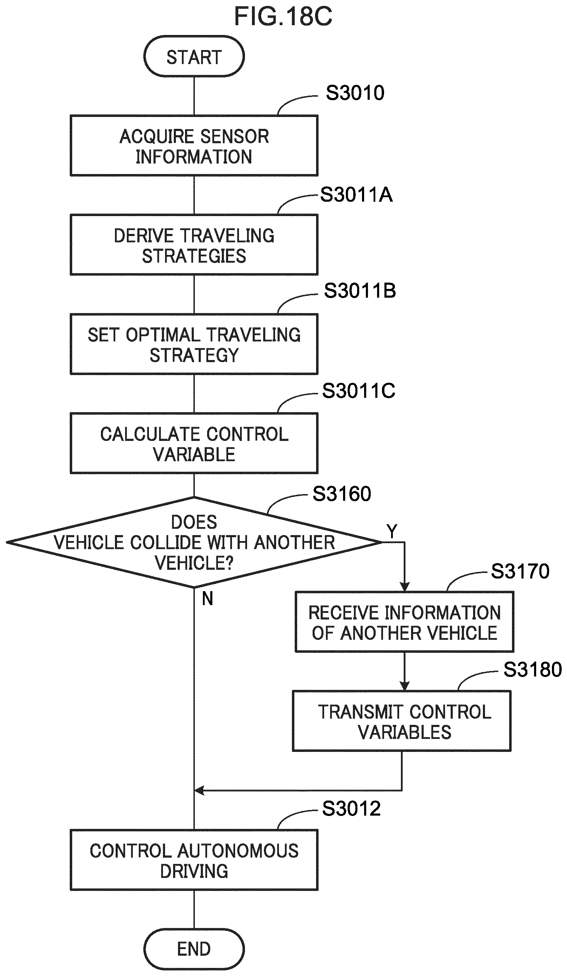

The central brain 3120A of the vehicle 12A repeatedly executes the flowchart shown in Fig. 18C. The processing of the flowchart of Fig. 18C may be substantially similar to the processing of the flowchart of Fig. 15 except for steps S3160, S3170, and S3180. The functional configuration of the central brain 3120 is as shown in Fig. 18A.

In step S3010, the central brain 3120A acquires the sensor information detected by the sensor. In step 11A, the central brain 3120A derives traveling strategies of the vehicle 12A based on the sensor information acquired in step S3010. In step S3011B, the central brain 3120A sets an optimal traveling strategy (traveling pattern) from among the derived traveling strategies.

In step S3011C, the central brain 3120A calculates a total of 16 control variables according to the traveling strategy (traveling pattern) set so as to enable traveling while avoiding an obstacle. In step S3160, the central brain 3120A determines whether or not there is a possibility that the vehicle 12A collides with another vehicle such as the vehicle 12D based on the sensor information and/or the calculated control variables. In a case where a negative determination is made in step S3160, the central brain 3120A proceeds to step S3012.

In a case where an affirmative determination is made in step S3160, the central brain 3120A receives the sensor information of the other vehicle 12D in step S3170. In step S3180, the central brain 3120A calculates the control variables of the other vehicle 12D based on the sensor information of the other vehicle 12D and the sensor information of the vehicle 12A, and transmits the calculated control variables to the other vehicle 12D.

In step S3012, the central brain 3120A controls the autonomous driving based on the control variables calculated in step S3011C, and ends the processing of the flowchart. The central brain 3120D of the vehicle 12D controls the autonomous driving of the vehicle 12D by using the control variables received from the vehicle 12A.

As described above, in a case where there is a possibility that the vehicle 12 collides with the another vehicle 12, the vehicle 12 generates the control variable of the another vehicle 12 and transmits the control variable of the another vehicle 12 to the another vehicle 12. This enables both the vehicle 12 and the another vehicle 12 to control the autonomous driving in consideration of movements of both the vehicle 12 and the another vehicle 12. As a result, it is possible to attempt to avoid the collision between the vehicle 12 and the another vehicle 12, and it is possible to reduce mutual damage even when the vehicles 12 collide with each other.

The above description is an example. Although an example in which the vehicle 12A transmits the control variables of the vehicle 12D to the vehicle 12D has been described in order to facilitate the description, the present embodiment is not limited to the above description. For example, the vehicle 12A may calculate the control variable of each of a plurality of other vehicles 12 that may collide with the vehicle 12A, and transmit the control variable to each of the other vehicles 12.

[Fourth Embodiment]

An obstacle may approach a vehicle during traveling of the vehicle, and in this case, it is preferable that the vehicle travels while changing behavior of the vehicle in order to avoid a contact or collision with the obstacle as described above. As described above, examples of the obstacle include a vehicle other than the own vehicle that is traveling, a wall surface, a guard rail, a curbstone, and other installed objects. In the following description, a case where another vehicle approaching the vehicle 12 is applied as an example of the obstacle will be described.

The vehicle generally has a difference for each vehicle type in various characteristics such as a physical characteristic of a part related to the behavior during traveling, a response characteristic, and a traveling characteristic (hereinafter, simply referred to as "vehicle characteristics"). Even in the case of vehicles of the same vehicle type, although the vehicle characteristics immediately after manufacture are substantially the same as each other, as a traveling distance increases, the difference in vehicle characteristics gradually increases due to a difference in use environment, use frequency, use method, or the like.

Therefore, among various traveling patterns shown in Fig. 10, a suitable traveling pattern is also different for each vehicle to be controlled.

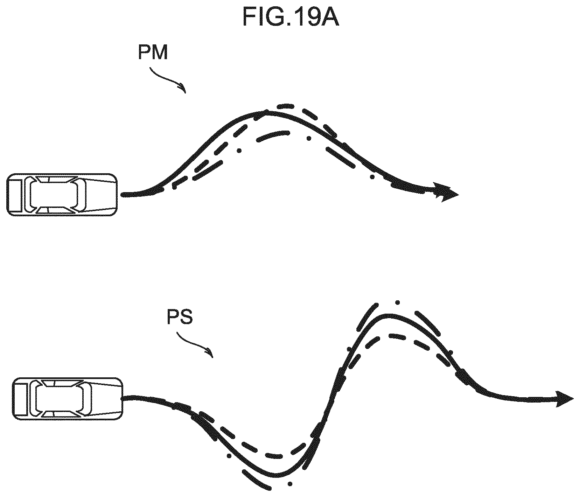

Fig. 19A is a diagram showing an example of a suitable traveling pattern for each vehicle when avoiding an obstacle. In the example shown in Fig. 19A, an example of a traveling pattern for each of three different vehicles is shown for each of traveling patterns PM and PS described above. When comparing the traveling patterns of different vehicles shown in Fig. 19A, a deviation width in a left-right direction with respect to a traveling direction of the vehicle when avoiding an obstacle is different, or a timing of a change in the traveling direction of the vehicle is different.

Therefore, a central brain 120 functioning as an example of an information processing apparatus according to the present embodiment has a function of a registration unit that registers a plurality of different traveling patterns in a memory, the traveling patterns being the past traveling patterns of a vehicle (hereinafter, referred to as "target vehicle") for avoiding an obstacle. In addition, the central brain 120 according to the embodiment has a function of an acquisition unit that acquires a plurality of pieces of information related to the target vehicle from a detection unit including a sensor that detects a situation around the target vehicle including the obstacle. In addition, the central brain 120 according to the embodiment includes a setting unit that selectively sets the traveling pattern for the target vehicle to avoid the obstacle from among the plurality of registered traveling patterns by using the plurality of pieces of information acquired by the acquisition unit, and has a function of a calculation unit that calculates a control variable for controlling behavior of the target vehicle such that the target vehicle travels according to the traveling pattern based on the plurality of pieces of information acquired by the acquisition unit and the set traveling pattern. The central brain 120 according to the embodiment has a function of a control unit that controls the behavior of the target vehicle based on the calculated control variable.

In the embodiment, the registration unit registers the traveling pattern in the memory for each vehicle to be controlled. In particular, in the embodiment, in order to avoid the obstacle during traveling of the target vehicle, an actual traveling path in a case where the target vehicle travels in the traveling pattern selected and set by the setting unit is set as a candidate for the traveling pattern to be registered by the registration unit.

That is, as described above, there is a difference in vehicle characteristics for each vehicle, and traveling path following performance of the set traveling pattern differs for each vehicle. Therefore, an actual traveling path does not necessarily match the set traveling pattern, and the actual traveling path reflects, to some extent, the vehicle characteristics of each vehicle. Therefore, the registration unit according to the embodiment registers the actual traveling path when an obstacle is avoided as a traveling pattern dedicated to the own vehicle according to the vehicle characteristics.

However, the invention is not limited to this mode. For example, in a case where the target vehicle is manually driven without performing the autonomous driving, the actual traveling path in a case where the traveling direction is changed may be registered by the registration unit in order to avoid an obstacle.

In addition, the registration unit according to the embodiment updates any one of the traveling patterns including modifications registered so far to a newly obtained traveling pattern.

As described above, in the embodiment, the registration unit registers the traveling pattern in the memory for each vehicle to be controlled, but the invention is not limited thereto. For example, a mode in which the registration unit registers the traveling pattern for each type of vehicle to be controlled may be employed. According to this mode, versatility of the traveling pattern can be improved as compared with a case where the traveling pattern is registered for each vehicle.

Here, similarly to the first embodiment described above, the calculation unit according to the embodiment calculates the control variable such that the target vehicle travels according to the traveling pattern set by the setting unit, the control variable includes a speed of the target vehicle and a timing of changing the speed of the target vehicle, and the calculation unit calculates the control variable by multivariate analysis by an integration method using deep learning, for example.

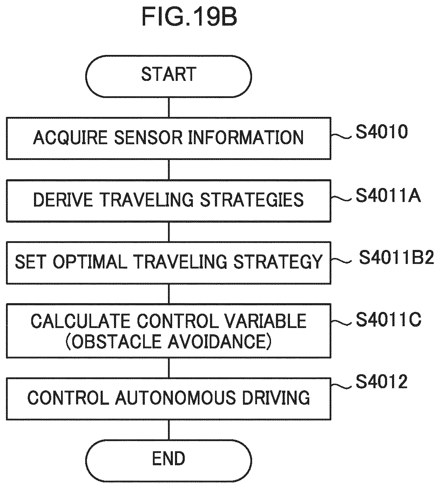

Fig. 19B is a flowchart showing an example of a flow of processing in the central brain 120 that enables the own vehicle 12A described above to travel while avoiding the other vehicle 12D according to the embodiment. In the processing shown in Fig. 19B, the processing of step S11B shown in Fig. 15 is executed instead of step S4011B1. The central brain 120 can repeatedly execute the processing shown in Fig. 19B instead of the processing shown in Fig. 15. A step of executing processing common to the first embodiment is denoted by the same step number as that of the first embodiment, and a description thereof is omitted here.

In step S4011B1, the central brain 120 sets an optimal traveling pattern from among the registered traveling patterns. In the embodiment, the registered traveling pattern is obtained from the past traveling path of the own vehicle registered by the registration unit as described above. The processing of steps S4011A to S4011C is an example of the function of the calculation unit, and the processing of steps S4011A and S4011B1 is an example of the function of the setting unit.

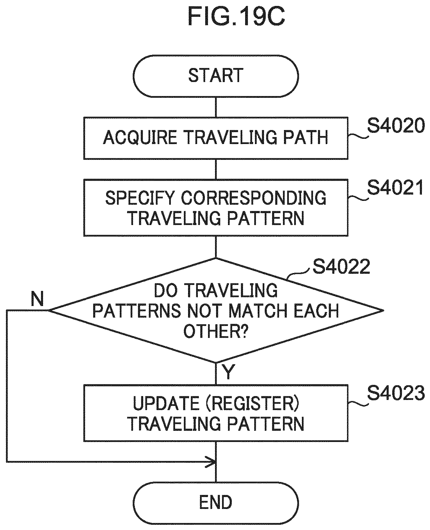

Fig. 19C is a flowchart showing an example of a flow of processing in the central brain 120 in a case where the registration unit registers the traveling pattern related to the own vehicle according to the embodiment. The central brain 120 executes the processing shown in Fig. 19C immediately after the own vehicle travels while avoiding another vehicle. In the following, a case where a plurality of types of basic traveling patterns such as the traveling patterns PL, PM, and PS and modifications of the traveling patterns are already registered in the memory in order to avoid the complication will be described.

In step S4020, the central brain 120 acquires an immediately previous traveling path on which the own vehicle has traveled while avoiding another vehicle (hereinafter, referred to as "target avoidance traveling"). In the embodiment, information indicating the traveling path is sequentially stored in the memory, and the traveling path is acquired by reading the information from the memory. However, it is needless to say that the invention is not limited to this mode.

In step S4021, the central brain 120 specifies a registered traveling pattern (hereinafter, referred to as "corresponding traveling pattern") corresponding to a traveling pattern (hereinafter, referred to as "acquired traveling pattern") indicated by the acquired traveling path. In the embodiment, the corresponding traveling pattern is specified by specifying the registered traveling pattern having the highest similarity to the acquired traveling pattern. However, the invention is not limited to this mode, and a mode in which the corresponding traveling pattern is specified by specifying the registered traveling pattern having the lowest dissimilarity to the acquired traveling pattern may be employed. Furthermore, in the embodiment, the similarity is derived using conventionally known template matching, but the invention is not limited thereto, and other similarity deriving methods such as a method using a cross correlation function (CCF) and a method using dynamic time warping (DTW) may be applied.

In step S4022, the central brain 120 determines whether or not the acquired traveling pattern and the corresponding traveling pattern do not match each other, and in a case where a negative determination is made, this processing ends, and in a case where an affirmative determination is made, the processing proceeds to step S4023. In the embodiment, the determination is made by determining whether or not the similarity when the corresponding traveling pattern is specified is equal to or lower than a predetermined threshold (for example, 0.9 in a case where a maximum value of the similarity is 1), but the invention is not limited thereto. For example, in the case of applying the dissimilarity to specify the corresponding traveling pattern, a mode in which the determination is made by determining whether or not the dissimilarity is equal to or higher than a predetermined threshold (for example, 0.1 in a case where a maximum value of the dissimilarity is 1) may be employed.

In step S4023, the central brain 120 replaces the corresponding traveling pattern with the acquired traveling pattern, thereby updating the corresponding traveling pattern to the acquired traveling pattern (registering the acquired traveling pattern). Then, the central brain 120 ends the processing of the flowchart. The processing of steps S4020 to S4023 is an example of the function of the registration unit.

It goes without saying that the information processing apparatus in the technology of the disclosure may be configured by combining at least some functions of the information processing apparatus according to the first embodiment with the information processing apparatus according to the fourth embodiment.

[Fifth Embodiment]

An obstacle may approach a vehicle during traveling of the vehicle, and in this case, it is preferable that the vehicle travels while changing behavior of the vehicle in order to avoid a contact or collision with the obstacle as described above. As described above, examples of the obstacle include a vehicle other than the own vehicle that is traveling, a wall surface, a guard rail, a curbstone, and other installed objects. In the following description, a case where another vehicle approaching the vehicle 12 is applied as an example of the obstacle will be described.

In a case where the own vehicle has traveled by applying any one of a plurality of different traveling patterns described above, a size of a space between the own vehicle and another vehicle changes in time series according to movement of at least one of the own vehicle and the another vehicle.

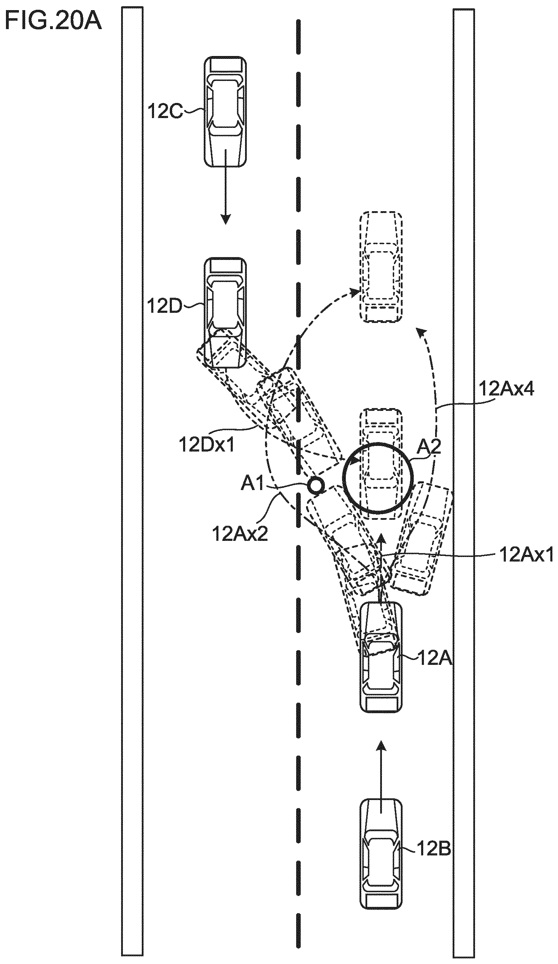

Fig. 20A is a diagram schematically showing a traveling pattern applicable to an own vehicle 12A and predicted traveling paths of the own vehicle 12A and another vehicle 12D in a traveling state between the own vehicle 12A and other vehicles 12B, 12C, and 12D shown in Fig. 9. In the example of the figure, similarly to Fig. 9, the other vehicle 12B is traveling following the own vehicle 12A, the other vehicle 12D is traveling ahead in the opposite lane, and the other vehicle 12C is traveling following the other vehicle 12D.

In the example shown in Fig. 20A, in a case where the own vehicle 12A travels in a traveling pattern 12Ax2 and at the same time the other vehicle 12D travels in a traveling pattern 12Dx1, a space A1 between the own vehicle 12A and the other vehicle 12D narrows in time series, and a possibility of a collision eventually becomes significantly high. On the other hand, even in a case where the other vehicle 12D travels in the traveling pattern 12Dx1, when the own vehicle 12A travels in a traveling pattern 12Ax4, a space A2 between the own vehicle 12A and the other vehicle 12D can secure a distance for each vehicle to pass each other. In addition, in some cases, it is possible to avoid a collision including a contact between the own vehicle 12A and the other vehicle 12D by applying a modification of the traveling pattern 12Ax2 without applying the traveling pattern 12Ax4.

Therefore, a setting unit in a central brain 120 according to the present embodiment applies, as a traveling strategy, a traveling pattern related to a traveling path to reach a destination while avoiding an obstacle (another vehicle in the embodiment), and sets a traveling pattern in which a size of a space that changes in time series according to movement of at least one of the own vehicle and another vehicle is maximized between the own vehicle and the obstacle (another vehicle in the embodiment) among a plurality of different traveling patterns.

In the example shown in Fig. 20A, a space having a circular shape in plan view is exemplified as an example of a space between the own vehicle and another vehicle, but the invention is not limited thereto. For example, various spaces such as a space having an elliptical shape in plan view, a space having a triangular shape in plan view, a space having a rectangular shape in plan view, and a space having a polygonal shape such as a pentagon or more in plan view can be applied as a space between the own vehicle and another vehicle. Furthermore, in the example shown in Fig. 20A, a case where the space is viewed in plan view is exemplified, but it goes without saying that not only a space in a horizontal direction but also a space in a height direction can be applied. That is, in the embodiment, a traveling strategy using not only a planar space but also a three-dimensional space is applied.

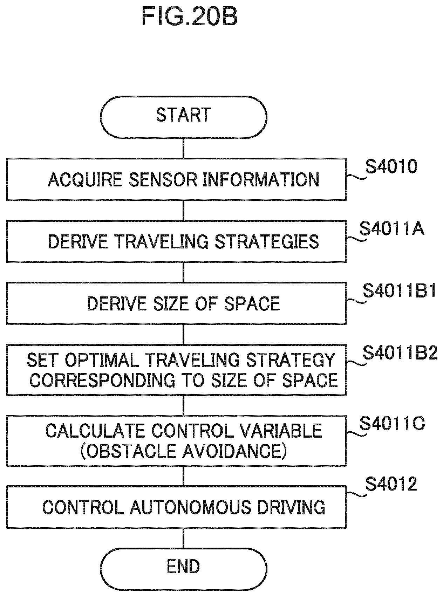

Fig. 20B is a flowchart showing an example of a flow of processing in the central brain 120 that enables the own vehicle 12A to travel while avoiding the other vehicle 12D according to the embodiment. In Fig. 20B, the processing of step S11B shown in Fig. 15 is executed instead of steps S4011B1 and S4011B2. The central brain 120 can repeatedly execute the processing shown in Fig. 20B instead of the processing shown in Fig. 15. A step of executing processing common to the first embodiment is denoted by the same step number as that of the first embodiment, and a description thereof is omitted here.

In step S4011B1, the central brain 120 derives the size of the above-described space for each of the traveling patterns (hereinafter, referred to as "selection candidate traveling patterns") including modifications that can be selected as a traveling pattern in which the own vehicle can avoid a collision with another vehicle. In the embodiment, the size of the above-described space is derived by estimating a position of the own vehicle after a predetermined time (0.01 seconds in the embodiment) has elapsed and a position of another vehicle after the time has elapsed in a case where the own vehicle has traveled in a target traveling pattern, the size being derived from the respective estimated positions. However, the invention is not limited to this mode. For example, a conventionally known distance sensor such as a LiDAR may be used to sequentially derive a distance between the own vehicle and another vehicle, and the size of the space may be derived using the derived distance.

In step S4011B2, the central brain 120 sets, as the traveling pattern to be actually applied, a selection candidate traveling pattern with the largest space size among space sizes of the respective derived selection candidate traveling patterns.

The processing of steps S4011A to S4011C is an example of a function of a calculation unit, and the processing of steps S4011A, S4011B1, and S4011B2 is an example of the function of the setting unit.

It goes without saying that the information processing apparatus in the technology of the disclosure may be configured by combining at least some functions of the information processing apparatus according to the first embodiment with an information processing apparatus according to the fifth embodiment.

[Sixth Embodiment]

An obstacle may approach a vehicle during traveling of the vehicle, and in this case, it is preferable that the vehicle travels while changing behavior of the vehicle in order to avoid a contact or collision with the obstacle as described above. As described above, examples of the obstacle include a vehicle other than the own vehicle that is traveling, a wall surface, a guard rail, a curbstone, and other installed objects. In the following description, a case where another vehicle approaching the vehicle 12 is applied as an example of the obstacle will be described.

Even in a case where it is predicted that the own vehicle can avoid a collision including a contact with another vehicle in a plurality of traveling patterns among a plurality of different traveling patterns described above, a level of a risk of the collision with the another vehicle differs for each of the plurality of traveling patterns.

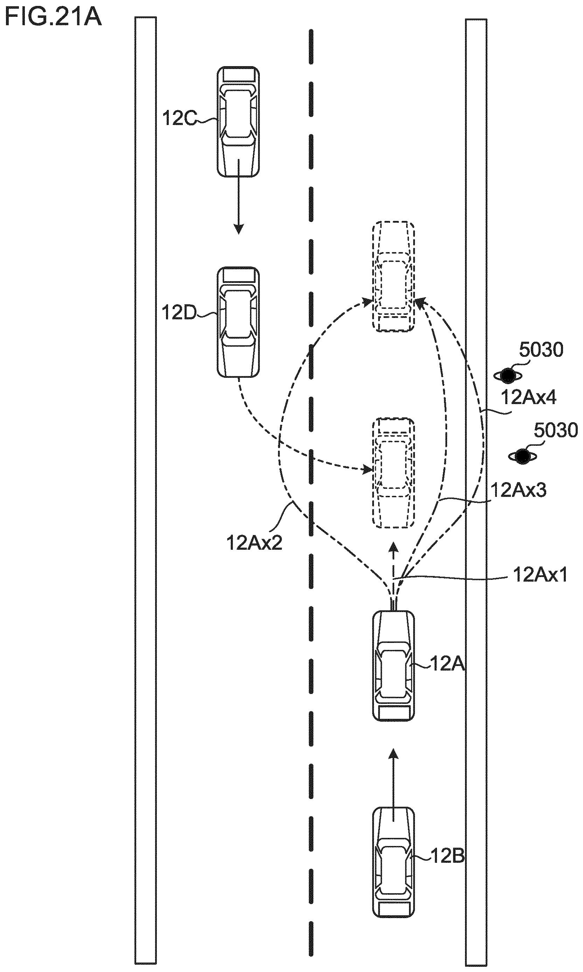

Fig. 21A is a diagram schematically showing a traveling pattern applicable to an own vehicle 12A and predicted traveling paths of the own vehicle 12A and another vehicles 12D in a traveling state between the own vehicle 12A and other vehicles 12B, 12C, and 12D shown in Fig. 9. In the example of the figure, similarly to Fig. 9, the other vehicle 12B is traveling following the own vehicle 12A, the other vehicle 12D is traveling ahead in the opposite lane, and the other vehicle 12C is traveling following the other vehicle 12D.

In the example shown in Fig. 21A, the own vehicle 12A collides with the other vehicle 12D in a traveling pattern 12Ax1 that is a path of the own vehicle 12A. On the other hand, it is predicted that the own vehicle 12A can avoid the collision including the contact with the other vehicle 12D in traveling patterns 12Ax2, 12Ax3, and 12Ax4. Therefore, the central brain 120 calculates each of the traveling patterns 12Ax2, 12Ax3, and 12Ax4 and sets any one of the traveling patterns 12Ax2, 12Ax3, and 12Ax4 as the traveling pattern.

However, in this case, for example, the presence of a pedestrian 5030 walking on a sidewalk, the other vehicle 12B, and the other vehicle 12C is not considered. For example, in the example shown in Fig. 21A, in the case of applying the traveling pattern 12Ax3 or the traveling pattern 12Ax4, the vehicle 12A approaches the pedestrian 5030 as compared with other traveling patterns, as a result of which an overall risk increases. The risk in this case is also higher in the traveling pattern 12Ax4 than in the traveling pattern 12Ax3. Further, in the case of applying the traveling pattern 12Ax2, the vehicle 12A approaches the other vehicle 12C as compared with other traveling patterns, and the risk is higher in this respect. In this case, since the vehicle 12A approaches the other vehicle 12B in the end, the risk is higher also in this sense.

Therefore, a setting unit in the central brain 120 according to the present embodiment applies, as a traveling strategy, a traveling pattern related to a traveling path to reach a destination while avoiding another vehicle. Then, the setting unit sets a weighting value indicating a low risk of the collision including the contact with another vehicle using a plurality of pieces of acquired information for the plurality of different traveling patterns, and preferentially and selectively sets the traveling pattern as the set weighting value is larger among the plurality of different traveling patterns. In the embodiment, a value in a range of 0 (zero) or more and 1 or less is applied as the weighting value, but it is needless to say that the weighting value is not limited thereto.

In addition, the setting unit according to the embodiment sets a smaller value as the weighting value in a case where the own vehicle protrudes from a traveling lane than in a case where the own vehicle does not protrude from the traveling lane. Furthermore, the setting unit according to the embodiment sets a larger value as the weighting value as the size of the space between the own vehicle and another vehicle at the time of determination is larger. A method of setting the weighting value is not limited to the above method, and for example, even in the case of protruding from the traveling lane, a smaller weighting value may be set in the case of protruding to the opposite lane than in the case of protruding to a parallel lane.

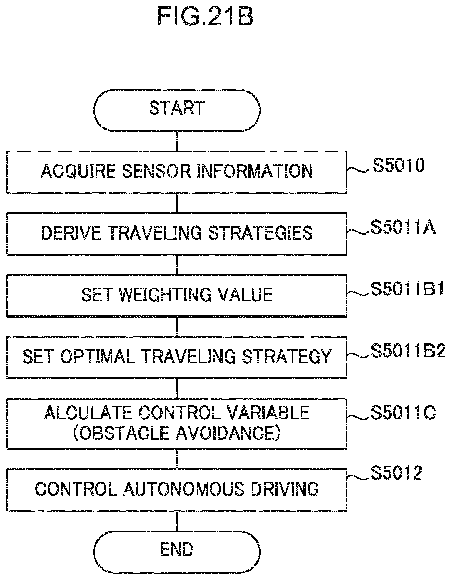

Fig. 21B is a flowchart showing an example of a flow of processing in the central brain 120 that enables the own vehicle 12A to travel while avoiding the other vehicle 12D according to the embodiment. In Fig. 21B, the processing of step S11B shown in Fig. 15 is executed instead of steps S5011B1 and S5011B2. The central brain 120 can repeatedly execute the processing shown in Fig. 21B instead of the processing shown in Fig. 15. A step of executing processing common to the first embodiment is denoted by the same step number as that of the first embodiment, and a description thereof is omitted here.

In step S5011B1, the central brain 120 derives the weighting value indicating the low risk described above for each of the traveling patterns (hereinafter, referred to as "selection candidate traveling patterns") including modifications that can be selected as a traveling pattern in which the own vehicle can avoid a collision with another vehicle.

In the embodiment, a smaller weighting value is derived in a case where the own vehicle protrudes from the traveling lane when the own vehicle travels in the target traveling pattern than in a case where the own vehicle does not protrude from the traveling lane. Further, in the embodiment, a larger weighting value is derived as the size of the space between the own vehicle and the other vehicle is larger in a case where the own vehicle travels in the target traveling pattern. In the embodiment, the smaller one of these two types of weighting values is applied, but the invention is not limited thereto. For example, an average value of these two types of weighting values may be applied.

The method of deriving the weighting value is not limited to these methods. For example, a mode in which a smaller weighting value is derived as a distance between the own vehicle and another obstacle such as another vehicle or a pedestrian is shorter in a case where the own vehicle travels in the target traveling pattern may be employed. In addition, for example, a mode in which a smaller weighting value is derived as the number of approaching obstacles increases as compared with a case where the own vehicle travels straight when the own vehicle travels in the target traveling pattern may be employed.

In step S5011B2, the central brain 120 sets, as the traveling pattern to be actually applied, a selection candidate traveling pattern having the largest weighting value among the weighting values for each of the respective derived selection candidate traveling patterns.

The processing of steps S5011A to S5011C is an example of a function of a calculation unit, and the processing of steps S5011A, S5011B1, and S5011B2 is an example of the function of the setting unit.

It goes without saying that the information processing apparatus in the technology of the disclosure may be configured by combining at least some functions of the information processing apparatus according to the first embodiment with an information processing apparatus according to the sixth embodiment.

In the embodiment, the value indicating the low risk is applied as the weighting value, but the invention is not limited thereto. For example, a value indicating the level of the risk may be applied as the weighting value. In this case, the setting unit preferentially and selectively sets the traveling pattern as the set weighting value is smaller among the selection candidate traveling patterns.

[Seventh Embodiment]

Next, a seventh embodiment will be described. Since the seventh embodiment has a similar configuration to that of the first embodiment, the same components are denoted by the same reference numerals, and a detailed description thereof will be omitted. In the seventh embodiment, a difference from the first embodiment will be described.

In the present embodiment, an optimal traveling route along which a vehicle travels is set according to a current situation. Specifically, a case where a traveling route set as a traveling strategy described above is set as a traveling pattern will be described.

A central brain 120 functions as a control unit that performs vehicle driving control for avoiding an obstacle such as another vehicle that obstructs an own vehicle by using information acquired by an acquisition unit. That is, the vehicle driving control for avoiding an obstacle is performed by acquiring information indicating a situation around the own vehicle detected by a sensor described above, for example, information indicating another vehicle around the own vehicle, information regarding an obstacle such as another vehicle that obstructs traveling of the own vehicle, road information (for example, a material of a road, vertical and lateral inclination angles of slopes, a freezing state of a road, and a moisture level of a road) indicating a road condition of a road on which a vehicle 12 travels, and the like.

Furthermore, the central brain 120 functions as the control unit that calculates a control variable for controlling behavior of the vehicle such as a speed of the vehicle and controls autonomous driving of the vehicle in units of 1/1 billion seconds based on the control variable. Specifically, the central brain 120 controls the behavior of the vehicle according to the traveling pattern set by the following relational expression. Then, the traveling of the vehicle capable of avoiding an obstacle is implemented.

The relational expression expresses a traveling track on which the vehicle that is traveling can travel by changing the behavior of the vehicle by a mathematical formula. That is, in a case where the vehicle avoids an obstacle, the vehicle travels on a curved road (curve) from a current position to a destination (for example, a position of a lane in which the vehicle is currently traveling after a predetermined time) while avoiding the obstacle. A traveling track of the curve is expressed by a mathematical formula. As an example of the relational expression, the following Formula (3) indicating a quadratic curve can be applied.

[Math. 3]

$$y = ax^2 \qquad\qquad (3)$$

In the formula, a is a proportional constant and is an example of the control variable. A radius of curvature of the curve changes as the proportional constant changes. In addition, a traveling direction changes according to a sign (+/-). With such a mathematical formula, it is possible to express the traveling pattern that can avoid an obstacle. Based on sensor information described above, the central brain 120 implements, as the behavior of the vehicle according to the proportional constant derived by goal seek, steering control, perfect speed control of performing acceleration/deceleration by correctly performing transmission to four spin angles and in-wheel motors mounted respectively on four wheels 21, and perfect steering control based on an optimal traveling direction.

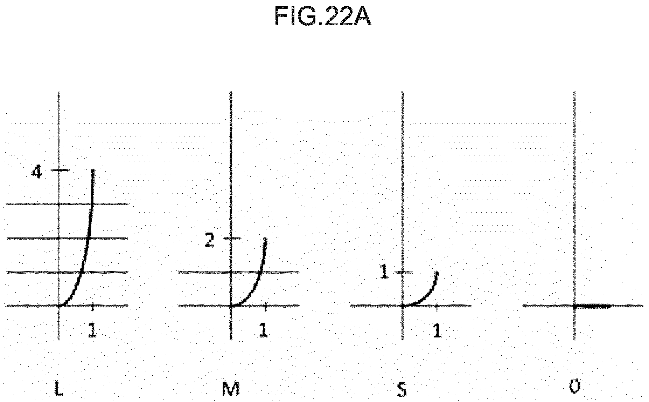

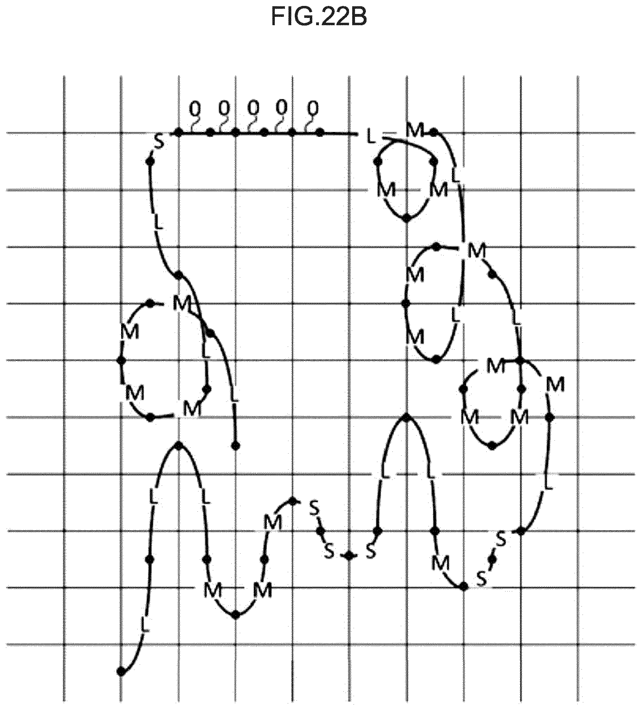

Fig. 22A is a conceptual diagram showing a traveling pattern based on a representative proportional constant. Fig. 22B is a conceptual diagram showing a traveling pattern based on a combination of a plurality of proportional constants.

A proportional constant a can be applied by being classified into a plurality of representative values corresponding to representative traveling patterns with different radii of curvature. In the embodiment, as shown in Fig. 22A, the representative proportional constant can be set to four stages of proportional constants of 0, S, M, and L (L corresponds to, for example, a traveling pattern having a maximum radius of curvature) including a proportional constant corresponding to straight traveling. In this manner, the steering control is performed by a mechanism that accelerates/decelerates the proportional constant by the in-wheel motors respectively mounted on the four wheels 21, and controls a steering angle of the vehicle. Then, for example, as shown in Fig. 22B, it is possible to perform traveling while varying the speed and traveling direction of the vehicle by combining a plurality of proportional constants.

There is a possibility that only the traveling pattern obtained by setting the above-described proportional constants of four stages of 0, S (small), M (middle), and L (large) is insufficient as a traveling pattern for avoiding an obstacle. Therefore, in the embodiment, a predetermined number of (for example, 10) proportional constants corresponding to respective traveling patterns having similar sizes are set in advance for the proportional constant of each of the stages of S, M, and L. The respective traveling patterns having similar sizes may be determined according to the speed of the vehicle.

That is, 10 types of traveling patterns having sizes similar to that of an S curve as a basic form are determined. Similarly, 10 types of traveling patterns having similar sizes are determined for an M curve and an L curve. Then, it is sufficient if one traveling pattern that can avoid a collision with another vehicle 12D is selected from a total of 30 traveling patterns. Specifically, it is sufficient if one proportional constant that can avoid a collision with the another vehicle 12D may be selected from among the proportional constants corresponding to each of the 30 types of traveling patterns. The S curve as the basic form, the M curve, and the L curve correspond to S, M, and L which are the traveling patterns shown in Fig. 22A.

The traveling pattern described above may be determined depending on whether the another vehicle 12D, which is an obstacle of an own vehicle 12A, is in a traveling state in which the another vehicle 12D is accelerating or a traveling state in which the another vehicle 12D is decelerating. For example, 10 types of traveling patterns having sizes similar to that of the S curve as the basic form may be determined according to a traveling state in which the vehicle is accelerating and a traveling state in which the vehicle is decelerating. The M curve and the L curve may be similarly determined. In this case, a total of 60 types of traveling patterns are obtained, but it is sufficient if one of 30 types of traveling patterns is selected according to the accelerating/decelerating traveling state.

In addition, in a case where the own vehicle 12A travels while avoiding the another vehicle 12D as an obstacle, the central brain 120 can consider another vehicle 12C following the another vehicle 12D. Specifically, when the own vehicle 12A travels while avoiding the another vehicle 12D that is an obstacle, the own vehicle 12A is required to quickly return to a lane (traveling path) on which the own vehicle 12A is traveling in order to avoid a contact (secondary obstacle) with the another vehicle 12C that follows the another vehicle 12D. In this case, it is sufficient if a speed of the another vehicle 12C following the another vehicle 12D and a distance between the own vehicle 12A and the another vehicle 12C are estimated. Then, the traveling pattern can be readjusted (selected) according to whether the another vehicle 12C following the another vehicle 12D is in a traveling state in which the another vehicle 12C is accelerating or a traveling state in which the another vehicle 12C is decelerating. In addition, it is possible to estimate the speed and acceleration/deceleration of the another vehicle 12D as an obstacle, estimate whether or not the following another vehicle 12C shifts to the traveling state in which the another vehicle 12C is decelerating according to the speed of the another vehicle 12D, and readjust (select) the traveling pattern. That is, although a surrounding environment of the own vehicle 12A changes from moment to moment, the traveling pattern can be changed every 1/1 billion seconds, and the behavior of the vehicle can be controlled so as to enable appropriate traveling according to the surrounding environment of the own vehicle 12A.

The traveling pattern selected according to the speed of the another vehicle described above is not limited to the acceleration/deceleration of the vehicle, and may include a traveling state during constant-speed traveling, or a part of the traveling pattern of acceleration/deceleration may be a traveling pattern in a constant-speed traveling state.

The above-described relational expression is not limited to Formula (3), and may be a complicated formula such as a multidimensional formula and a polynomial. In addition, the representative proportional constant described above is not limited to four stages.

Next, processing in the central brain 120 according to the embodiment will be described.

The central brain 120 acquires the sensor information detected by the sensor (step S10 in Fig. 3), calculates the control variable (step S11 in Fig. 3), and controls the autonomous driving (step S12 in Fig. 3). Specifically, the central brain 120 derives the traveling strategy of the vehicle 12 based on the sensor information (step S11A in Fig. 15). An optimal traveling strategy (traveling pattern) is set from among the derived traveling strategies (step S11B in Fig. 15). That is, one traveling pattern (proportional constant) that for traveling while avoiding an obstacle (for example, the another vehicle 12D) is selected from a predetermined number (for example, 30 types) of traveling patterns based on the S curve, the M curve, and the L curve. Next, a control variable corresponding to the set traveling strategy (selected traveling pattern) is calculated (step S11C in Fig. 15).

The traveling strategy (traveling pattern) described above can be changed according to the situation around the vehicle that changes from moment to moment. Therefore, the central brain 120 controls the behavior of the vehicle such as the steering of the vehicle and the speed of the vehicle based on the control variable calculated according to prediction of the collision including the contact described above, so that it is possible to avoid the collision including the contact and to perform the autonomous driving while reducing damage of the vehicle at the time of the collision.

In the embodiment, for a traveling state to be taken by the own vehicle according to the situation around the own vehicle that changes from moment to moment, a traveling path to be taken is expressed by a mathematical expression indicating a predetermined curve, and the path based on the mathematical formula is selected as a traveling pattern to perform the autonomous driving. Therefore, the central brain 120 can change the traveling pattern, for example, every 1/1 billion seconds according to the situation around the vehicle that changes from moment to moment, and can make a decision flexibly so as to enable appropriate traveling according to the situation around the vehicle.

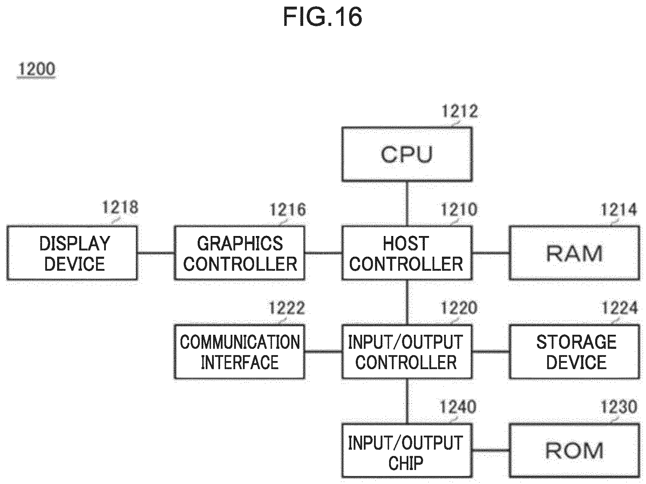

Fig. 16 schematically shows an example of a hardware configuration of a computer 1200 that functions as the central brains 120, 2120, and 3120. A program installed in the computer 1200 can cause the computer 1200 to function as one or more "units" of the apparatus according to the present embodiment, or cause the computer 1200 to perform an operation associated with the apparatus according to the embodiment or one or more "units" thereof, and/or can cause the computer 1200 to execute a process according to the embodiment or a stage of the process. Such a program may be executed by a CPU 1212 to cause the computer 1200 to perform a certain operation associated with some or all of the blocks in the flowcharts and block diagrams described herein.

The computer 1200 according to the embodiment includes the CPU 1212, a RAM 1214, and a graphics controller 1216, which are mutually connected by a host controller 1210. The computer 1200 also includes input/output units such as a communication interface 1222, a storage device 1224, a digital versatile disk (DVD) drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a read only memory (ROM) 1230 and legacy input/output units such as a keyboard, which are connected to the input/output controller 1220 via an input/output chip 1240.

The CPU 1212 operates according to the program stored in the ROM 1230 and the RAM 1214, thereby controlling each unit. The graphics controller 1216 acquire image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores the program and data to be used by the CPU 1212 in the computer 1200. The DVD drive reads the program or data from a DVD-ROM or the like and provides the program or data to the storage device 1224. The IC card drive reads the program and data from an IC card and/or writes the program and data to the IC card.

The ROM 1230 stores therein a boot program to be executed by the computer 1200 at the time of activation and/or a program that depends on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as the DVD-ROM or the IC card. The program is read from the computer-readable storage medium, installed in the storage device 1224, the RAM 1214, or the ROM 1230, which is also an example of the computer-readable storage medium, and executed by the CPU 1212. Information processing described in these programs is read by the computer 1200 and provides cooperation between the programs and various types of hardware resources described above. The apparatus or method may be configured by implementing operation or processing of information according to the use of the computer 1200.

For example, in a case where communication is performed between the computer 1200 and an external device, the CPU 1212 may execute a communication program loaded into the RAM 1214 and instruct the communication interface 1222 to execute communication processing based on processing described in the communication program. Under the control of the CPU 1212, the communication interface 1222 reads transmission data stored in a transmission buffer region provided in a recording medium such as the RAM 1214, the storage device 1224, the DVD-ROM, or the IC card, transmits the read transmission data to the network, or writes reception data received from the network to a reception buffer region or the like provided on the recording medium.

In addition, the CPU 1212 may read a necessary part of or the entire file or database stored in an external recording medium such as the storage device 1224, the DVD drive (DVD-ROM), the IC card, or the like into the RAM 1214, and may execute various types of processing on the data on the RAM 1214. Next, the CPU 1212 may write back the processed data to the external recording medium.

Various types of information such as various types of programs, data, tables, and databases may be stored in a recording medium and subjected to the information processing. The CPU 1212 may execute various types of processing on the data read from the RAM 1214, the various types of processing including various types of operations, the information processing, condition determination, conditional branching, unconditional branching, and information search/replacement, which are described throughout the disclosure and designated by a command sequence of a program, and writes back the results to the RAM 1214. In addition, the CPU 1212 may search for information in a file, a database, or the like in the recording medium. For example, in a case where a plurality of entries each having an attribute value of a first attribute associated with an attribute value of a second attribute are stored in the recording medium, the CPU 1212 may search for an entry in which the attribute value of the first attribute satisfies a designated condition among the plurality of entries, read the attribute value of the second attribute stored in the entry, and thereby acquire the attribute value of the second attribute associated with the first attribute satisfying a predetermined condition.

The program or software module described above may be stored in a computer-readable storage medium on the computer 1200 or in the vicinity of the computer 1200. Furthermore, a recording medium such as a hard disk or a RAM provided in a server system connected to a dedicated communication network or the Internet can be used as the computer-readable storage medium, thereby providing a program to the computer 1200 via the network.

The blocks in the flowcharts and block diagrams in the embodiment may represent stages of a process in which the operation is performed or "units" of the apparatus that are responsible for performing the operation. Certain stages and "units" may be implemented by a dedicated circuit, a programmable circuit provided together with a computer-readable instruction stored on a computer-readable storage medium, and/or a processor provided together with the computer-readable instruction stored on the computer-readable storage medium. The dedicated circuit may include a digital and/or analog hardware circuit, and may include an integrated circuit (IC) and/or a discrete circuit. The programmable circuit may include a reconfigurable hardware circuit including, for example, AND, OR, XOR, NAND, NOR, and other logical operations, a flip-flop, a register, and a memory element, such as a field programmable gate array (FPGA) and a programmable logic array (PLA).

The computer-readable storage medium may include any tangible device capable of storing an instruction to be executed by a suitable device, so that the computer-readable storage medium having the instruction stored therein includes an article including an instruction that may be executed to create means for performing the operation specified in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disc read only memory (CD-ROM), a digital versatile disk (DVD), a Blu-Ray disk, a memory stick, and an integrated circuit card.

The computer-readable instruction may include a source code or an object code described in any combination of one or more programming languages, including an assembler instruction, an instruction-set-architecture (ISA) instruction, a machine instruction, a machine-dependent instruction, a microcode, a firmware instruction, state setting data, or an object-oriented programming language such as Smalltalk (registered trademark), JAVA (registered trademark), or C++, and a procedural programming language according to the related art, such as the "C" programming language or similar programming languages.

The computer-readable instruction may be provided for a processor of a general purpose computer, a special purpose computer, or another programmable data processing apparatus, or a programmable circuit, either locally or via a local area network (LAN) or a wide area network (WAN) such as the Internet, to cause the processor of the general purpose computer, the special purpose computer, or the another programmable data processing apparatus or the programmable circuit to execute the computer-readable instruction to generate means for performing the operation designated in the flowcharts or block diagrams. Examples of the processor include a computer processor, a processing unit, a microprocessor, a digital signal processor, a controller, and a microcontroller.

Although the invention has been described with reference to the embodiments, the technical scope of the invention is not limited to the scope described in the embodiments. It is apparent to those skilled in the art that various modifications or improvements can be made to the above embodiments. It is apparent from the description of the claims that such changed modes or improved modes can also be included in the technical scope of the invention.

It should be noted that an order of execution of processing such as operations, procedures, steps, and stages in the apparatuses, systems, programs, and methods shown in the claims, the specification, and the drawings can be implemented in any order unless "before", "prior to", or the like is explicitly stated, and unless the output of the previous processing is used in the later processing. Even in a case where the operation flow in the claims, the specification, and the drawings is described using the terms "first,", "next,", and the like for convenience, it does not mean that it is essential to execute the operation flow in this order.

The disclosures of Japanese Patent Application No. 2022-170165, Japanese Patent Application No. 2022-182131, Japanese Patent Application No. 2022-186645, Japanese Patent Application No. 2023-000629, Japanese Patent Application No. 2023-000630, Japanese Patent Application No. 2023-002663, Japanese Patent Application No. 2023-004746, Japanese Patent Application No. 2023-008289, and Japanese Patent Application No. 2023-008290 are incorporated herein by reference in their entireties.

All documents, patent applications, and technical standards mentioned herein are incorporated herein by reference to the same extent as if each individual document, patent application, and technical standard were specifically and individually stated.

**Claims**

1. An information processing apparatus comprising:

   an acquisition unit that acquires a plurality of pieces of information related to a vehicle from a detection unit including a sensor that detects a situation around the vehicle including an obstacle at a second cycle shorter than a first cycle at which surroundings of the vehicle are imaged, as a cycle for detecting the situation around the vehicle;
   a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; and
   a control unit that controls the behavior of the vehicle based on the calculated control variable.

2. The information processing apparatus according to claim 1, wherein
   the calculation unit calculates the control variable by multivariate analysis by an integration method using deep learning.

3. The information processing apparatus according to claim 1, wherein
   the acquisition unit acquires the plurality of pieces of information in units of 1/1 billion seconds, the calculation unit calculates the control variable by using the information acquired in units of 1/1 billion seconds, and the control unit performs the control of the behavior of the vehicle by using the control variable in units of 1/1 billion seconds.

4. The information processing apparatus according to claim 1, wherein
the setting unit applies, as the traveling strategy, a traveling pattern related to a traveling path to reach a destination while avoiding the obstacle, and sets a traveling pattern in which a size of a space between the vehicle and the obstacle exceeds a predetermined value among a plurality of different traveling patterns.

5. The information processing apparatus according to claim 4, wherein
the calculation unit calculates the control variable such that the vehicle travels according to the set traveling pattern.

6. The information processing apparatus according to claim 5, wherein
the control variable is a speed of the vehicle and a timing of changing the speed of the vehicle.

7. The information processing apparatus according to claim 1, further comprising a transmission unit that transmits the control variable calculated by the calculation unit to another vehicle present around the vehicle in a case where it is determined that the vehicle performs emergency behavior based on the control variable.

8. The information processing apparatus according to claim 1, further comprising a transmission unit that transmits a signal indicating that the vehicle performs emergency behavior to another vehicle present around the vehicle in a case where it is determined that the vehicle performs the emergency behavior based on the control variable calculated by the calculation unit.

9. The information processing apparatus according to claim 1, wherein
the calculation unit calculates the control variable by multivariate analysis by an integration method using deep learning.

10. An information processing apparatus comprising:

an acquisition unit that acquires a plurality of pieces of information related to a vehicle from a detection unit including a sensor that detects a situation around the vehicle including an obstacle at a second cycle shorter than a first cycle at which surroundings of the vehicle are imaged, as a cycle for detecting the situation around the vehicle;
a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy;
a control unit that controls the behavior of the vehicle based on the calculated control variable;
a reception unit that receives a plurality of pieces of information related to another vehicle including a situation around the another vehicle and acquired by a sensor of the another vehicle in a case where the control unit determines that the vehicle is to collide with the obstacle and the obstacle is the another vehicle; and
a transmission unit that causes the calculation unit to calculate a control variable for controlling behavior of the another vehicle based on at least the plurality of pieces of information related to the another vehicle and the plurality of pieces of information related to the vehicle, and transmits the calculated control variable for controlling the behavior of the another vehicle to the another vehicle.

11. The information processing apparatus according to claim 10, wherein
the control variable for controlling the behavior of the another vehicle is calculated based on at least the plurality of pieces of information related to the another vehicle, the plurality of pieces of information related to the vehicle, and the control variable for controlling the behavior of the vehicle.

12. The information processing apparatus according to claim 10, wherein
the calculation unit calculates the control variable by multivariate analysis by an integration method using deep learning.

13. An information processing apparatus comprising:

a registration unit that registers a plurality of different traveling patterns that are past traveling patterns of a vehicle for avoiding an obstacle;
an acquisition unit that acquires a plurality of pieces of information related to the vehicle from a detection unit including a sensor that detects a situation around the vehicle including the obstacle;
a calculation unit that includes a setting unit that selectively sets a traveling pattern for the vehicle to avoid the obstacle from among the plurality of registered traveling patterns by using the plurality of pieces of acquired information, and calculates a control variable for controlling behavior of the vehicle such that the vehicle travels according to the traveling pattern based on the plurality of pieces of acquired information and the set traveling pattern; and
a control unit that controls the behavior of the vehicle based on the calculated control variable.

14. The information processing apparatus according to claim 13, wherein
the registration unit registers the traveling pattern for each vehicle to be controlled or for each vehicle type of the vehicle.

15. The information processing apparatus according to claim 13, wherein
the obstacle is another vehicle other than the vehicle.

16. An information processing apparatus comprising:

an acquisition unit that acquires a plurality of pieces of information related to a vehicle from a detection unit including a sensor that detects a situation around the vehicle including an obstacle;
a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; and
a control unit that controls the behavior of the vehicle based on the calculated control variable, wherein
the setting unit applies, as the traveling strategy, a traveling pattern related to a traveling path to reach a destination while avoiding the obstacle, and sets a traveling pattern in which a size of a space that changes in time series according to movement of at least one of the vehicle and the obstacle between the vehicle and the obstacle is maximized among a plurality of different traveling patterns.

17. The information processing apparatus according to claim 16, wherein
the obstacle is another vehicle other than the vehicle.

18. An information processing apparatus comprising:

an acquisition unit that acquires a plurality of pieces of information related to a vehicle from a detection unit including a sensor that detects a situation around the vehicle including an obstacle;
a calculation unit that includes a setting unit that sets a traveling strategy for the vehicle to avoid the obstacle based on the plurality of pieces of acquired information, and calculates a control variable for controlling behavior of the vehicle based on the plurality of pieces of acquired information and the set traveling strategy; and
a control unit that controls the behavior of the vehicle based on the calculated control variable, wherein
the setting unit applies, as the traveling strategy, a traveling pattern related to a traveling path to reach a destination while avoiding the obstacle, sets a weighting value according to a risk of a collision including a contact with the obstacle by using the plurality of pieces of acquired information for a plurality of different traveling patterns, and selectively sets a traveling pattern from among the plurality of different traveling patterns according to the set weighting value.

19. The information processing apparatus according to claim 18, wherein
the weighting value is a value indicating a low risk or a value indicating a high risk.

20. The information processing apparatus according to claim 18, wherein
the obstacle is another vehicle other than the vehicle.

21. The information processing apparatus according to claim 18, wherein
the setting unit sets a value indicating a higher risk as the weighting value in a case where the vehicle protrudes from a traveling lane than in a case where the vehicle does not protrude from the traveling lane.

22. The information processing apparatus according to claim 18, wherein
the setting unit sets a value indicating a lower risk as the weighting value as a size of a space between the vehicle and the obstacle is larger.

23. A program for causing a computer to function as the information processing apparatus according to any one of claims 1

to 22.

# FIG.1

EP 4 610 129 A1

FIG.2

## FIG.3

START

ACQUIRE SENSOR
INFORMATION — S10

CALCULATE CONTROL
VARIABLES — S11

CONTROL
AUTONOMOUS DRIVING — S12

END

# FIG.4

FIG.5

# FIG.6

FIG.7

FIG.8

FIG.9

## FIG.10

PL

PM

PS

FIG.11

12A

# FIG.12

10(120)

FIG.13

12C

12D

12Ax2

12Ax3

12Ax1

12A

12B

FIG.14

12C

12Ax3

12Ax1

12A

12B

## FIG.15

```
        ┌─────────────┐
        │   START     │
        └─────────────┘
               │
   ┌───────────────────────┐
   │   ACQUIRE SENSOR      │──── S10
   │   INFORMATION         │
   └───────────────────────┘
               │
   ┌───────────────────────┐
   │   DERIVE TRAVELING    │──── S11A
   │   STRATEGY            │
   └───────────────────────┘
               │
   ┌───────────────────────┐
   │   SET OPTIMAL         │──── S11B
   │   TRAVELING STRATEGY  │
   └───────────────────────┘
               │
   ┌───────────────────────┐
   │ CALCULATE CONTROL     │──── S11C
   │ VARIABLE              │
   │ (OBSTACLE AVOIDANCE)  │
   └───────────────────────┘
               │
   ┌───────────────────────┐
   │   CONTROL             │──── S12
   │   AUTONOMOUS DRIVING  │
   └───────────────────────┘
               │
        ┌─────────────┐
        │    END      │
        └─────────────┘
```

FIG.16

1200

```
                                                    1212
                                              ┌──────────┐
                                              │   CPU    │
                                              └──────────┘

  1218              1216            1210               1214
┌─────────┐    ┌────────────┐  ┌────────────┐    ┌──────────┐
│ DISPLAY │────│  GRAPHICS  │──│    HOST    │────│   RAM    │
│ DEVICE  │    │ CONTROLLER │  │ CONTROLLER │    │          │
└─────────┘    └────────────┘  └────────────┘    └──────────┘

              1222            1220               1224
         ┌──────────────┐ ┌──────────────┐ ┌──────────┐
         │COMMUNICATION │─│ INPUT/OUTPUT │─│ STORAGE  │
         │  INTERFACE   │ │  CONTROLLER  │ │ DEVICE   │
         └──────────────┘ └──────────────┘ └──────────┘

                            1240              1230
                       ┌──────────────┐ ┌──────────┐
                       │ INPUT/OUTPUT │─│   ROM    │
                       │    CHIP      │ │          │
                       └──────────────┘ └──────────┘
```

46

# FIG.17A

EP 4 610 129 A1

# FIG.17B

START

S2010

ACQUIRE SENSOR
INFORMATION

S2011

CALCULATE CONTROL
VARIABLES

S2120

IS
EMERGENCY AVOIDANCE TO BE
PERFORMED?

Y

N

S2150

TRANSMIT CONTROL
VARIABLES

S2012

CONTROL
AUTONOMOUS DRIVING

END

# FIG.17C

```
        START
          |
          |———— S2010
    ┌─────────────┐
    │ ACQUIRE SENSOR │
    │ INFORMATION   │
    └─────────────┘
          |
          |———— S2011A
    ┌─────────────┐
    │ DERIVE TRAVELING │
    │ STRATEGIES      │
    └─────────────┘
          |
          |———— S2011B
    ┌─────────────┐
    │ SET OPTIMAL    │
    │ TRAVELING STRATEGY │
    └─────────────┘
          |
          |———— S2011C
    ┌─────────────┐
    │ CALCULATE CONTROL │
    │ VARIABLE        │
    └─────────────┘
          |
          |———— S2120
         ╱────────────╲
        ╱      IS       ╲          Y
    ◁ EMERGENCY AVOIDANCE TO BE ▷——————┐
        ╲  PERFORMED?  ╱                │
         ╲────────────╱                 │———— S2150
          | N                    ┌─────────────┐
          |                      │ TRANSMIT CONTROL │
          |                      │ VARIABLES       │
          |                      └─────────────┘
          |                             |
          |←————————————————————————————┘
          |———— S2012
    ┌─────────────┐
    │ CONTROL AUTONOMOUS │
    │ DRIVING          │
    └─────────────┘
          |
         END
```

FIG.18A

# FIG.18B

START

ACQUIRE SENSOR INFORMATION ⟵ S3010

CALCULATE CONTROL VARIABLES ⟵ S3011

DOES VEHICLE COLLIDE WITH ANOTHER VEHICLE? ⟵ S3160

Y

N

RECEIVE INFORMATION OF ANOTHER VEHICLE ⟵ S3170

TRANSMIT CONTROL VARIABLES ⟵ S3180

CONTROL AUTONOMOUS DRIVING ⟵ S3012

END

# FIG.18C

START

S3010

ACQUIRE SENSOR
INFORMATION

S3011A

DERIVE TRAVELING
STRATEGIES

S3011B

SET OPTIMAL TRAVELING
STRATEGY

S3011C

CALCULATE CONTROL
VARIABLE

S3160

DOES
VEHICLE COLLIDE WITH ANOTHER
VEHICLE?

Y

N

S3170

RECEIVE INFORMATION
OF ANOTHER VEHICLE

S3180

TRANSMIT CONTROL
VARIABLES

S3012

CONTROL AUTONOMOUS
DRIVING

END

FIG.19A

# FIG.19B

```
┌─────────────────┐
│      START      │
└─────────────────┘
         │
┌─────────────────────────────────┐
│  ACQUIRE SENSOR INFORMATION     │── S4010
└─────────────────────────────────┘
         │
┌─────────────────────────────────┐
│  DERIVE TRAVELING STRATEGIES    │── S4011A
└─────────────────────────────────┘
         │
┌─────────────────────────────────┐
│  SET OPTIMAL TRAVELING STRATEGY │── S4011B2
└─────────────────────────────────┘
         │
┌─────────────────────────────────┐
│  CALCULATE CONTROL VARIABLE     │── S4011C
│  (OBSTACLE AVOIDANCE)           │
└─────────────────────────────────┘
         │
┌─────────────────────────────────┐
│  CONTROL AUTONOMOUS DRIVING     │── S4012
└─────────────────────────────────┘
         │
┌─────────────────┐
│       END       │
└─────────────────┘
```

# FIG.19C

START

ACQUIRE TRAVELING PATH —— S4020

SPECIFY CORRESPONDING
TRAVELING PATTERN —— S4021

S4022

DO TRAVELING
PATTERNS NOT MATCH EACH
OTHER?

N

Y

UPDATE (REGISTER)
TRAVELING PATTERN —— S4023

END

FIG.20A

# FIG.20B

```
        ┌─────────────────┐
        │      START      │
        └─────────────────┘
                 │
┌───────────────────────────────────┐
│   ACQUIRE SENSOR INFORMATION       │──── S4010
└───────────────────────────────────┘
                 │
┌───────────────────────────────────┐
│   DERIVE TRAVELING STRATEGIES      │──── S4011A
└───────────────────────────────────┘
                 │
┌───────────────────────────────────┐
│      DERIVE SIZE OF SPACE          │──── S4011B1
└───────────────────────────────────┘
                 │
┌───────────────────────────────────┐
│  SET OPTIMAL TRAVELING STRATEGY    │──── S4011B2
│  CORRESPONDING TO SIZE OF SPACE    │
└───────────────────────────────────┘
                 │
┌───────────────────────────────────┐
│   CALCULATE CONTROL VARIABLE       │──── S4011C
│      (OBSTACLE AVOIDANCE)          │
└───────────────────────────────────┘
                 │
┌───────────────────────────────────┐
│   CONTROL AUTONOMOUS DRIVING       │──── S4012
└───────────────────────────────────┘
                 │
        ┌─────────────────┐
        │       END       │
        └─────────────────┘
```

FIG.21A

## FIG.21B

```
            ┌───────────┐
            │   START   │
            └───────────┘
                  │
  ┌──────────────────────────────┐
  │  ACQUIRE SENSOR INFORMATION   │──S5010
  └──────────────────────────────┘
                  │
  ┌──────────────────────────────┐
  │  DERIVE TRAVELING STRATEGIES  │──S5011A
  └──────────────────────────────┘
                  │
  ┌──────────────────────────────┐
  │     SET WEIGHTING VALUE       │──S5011B1
  └──────────────────────────────┘
                  │
  ┌──────────────────────────────┐
  │  SET OPTIMAL TRAVELING STRATEGY │──S5011B2
  └──────────────────────────────┘
                  │
  ┌──────────────────────────────┐
  │  ALCULATE CONTROL VARIABLE    │──S5011C
  │    (OBSTACLE AVOIDANCE)       │
  └──────────────────────────────┘
                  │
  ┌──────────────────────────────┐
  │   CONTROL AUTONOMOUS DRIVING  │──S5012
  └──────────────────────────────┘
                  │
            ┌───────────┐
            │    END    │
            └───────────┘
```

FIG.22A

# FIG.22B

## INTERNATIONAL SEARCH REPORT

| International application No. |
| --- |
| **PCT/JP2023/038225** |

**A.    CLASSIFICATION OF SUBJECT MATTER**

*B60W 30/09*(2012.01)i; *B60W 40/06*(2012.01)i; *B60W 50/06*(2006.01)i; *B60W 60/00*(2020.01)i; *G08G 1/0968*(2006.01)i; *G08G 1/16*(2006.01)i
   FI:    B60W30/09; B60W40/06; B60W50/06; B60W60/00; G08G1/0968; G08G1/16 A; G08G1/16 C

According to International Patent Classification (IPC) or to both national classification and IPC

**B.    FIELDS SEARCHED**

Minimum documentation searched (classification system followed by classification symbols)
   B60W30/09; B60W40/06; B60W50/06; B60W60/00; G08G1/0968; G08G1/16

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2018/134941 A1 (HONDA MOTOR CO., LTD.) 26 July 2018 (2018-07-26) | 1-6, 9, 16-23 |
| | paragraphs [0017]-[0098], fig. 4, 6-10 | |
| Y | | 7-8 |
| A | | 10-15 |
| Y | JP 2019-123414 A (TOYOTA JIDOSHA KABUSHIKI KAISHA) 25 July 2019 (2019-07-25) | 7-8 |
| | paragraphs [0020]-[0021] | |
| A | JP 2021-522101 A (ROBERT BOSCH GMBH) 30 August 2021 (2021-08-30) | 10-12 |
| | entire text, all drawings | |
| A | JP 2019-512824 A (NUTONOMY INC) 16 May 2019 (2019-05-16) | 13-15 |
| | entire text, all drawings | |
| A | JP 2019-206327 A (BAIDU USA LLC) 05 December 2019 (2019-12-05) | 13-15 |
| | entire text, all drawings | |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 December 2023** | **09 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/038225** |

---

**Box No. III     Observations where unity of invention is lacking (Continuation of item 3 of first sheet)**

This International Searching Authority found multiple inventions in this international application, as follows:

Document 1: WO 2018/134941 A1 (HONDA MOTOR CO., LTD.) 26 September 2018 (2018-07-26)
        paragraphs [0017]-[0098], fig. 4, 6, 10
        & US 2019/0367018 A1
        paragraphs [0026]-[0107], fig. 4, 6-10
        & CN 110177722 A

The claims are classified into the following four inventions.

(Invention 1) Claims 1-12 and 23
Claims 1-12 and 23 are classified as invention 1 due to having the special technical feature of "an information processing device" "comprising" "an acquisition unit that acquires a plurality of information relating to a vehicle from a detection unit that includes a sensor for detecting a situation of the surroundings the vehicle including obstacles, at a second period shorter than a first period for imaging the surroundings of the vehicle as a period for detecting the situation of the surroundings of the vehicle".

(Invention 2) Claims 13-15
Claims 13-15 share, with claim 1 classified as invention 1, the technical feature of "an information processing device" "comprising" "an acquisition unit that acquires a plurality of information relating to the vehicle from a detection unit that includes a sensor for detecting a situation of the surroundings the vehicle including obstacles". However, this technical feature does not make a contribution over the prior art in the light of the content disclosed in document 1 (see, in particular, paragraph [0042]), and thus cannot be said to be a special technical feature. Furthermore, there are no other identical or corresponding special technical features between claims 13-15 and claim 1.
Additionally, claims 13-15 are not dependent claims of claim 1. Moreover, claims 13-15 are not substantially identical to or similarly closely related to any of the claims classified as invention 1.
Therefore, claims 13-15 cannot be classified as invention 1.
Claims 13-15 are classified as invention 2 due to having the special technical feature of "an information processing device" "comprising" "a registration unit that registers a plurality of different driving patterns, which are driving patterns that have been performed in the past in order for the vehicle to avoid an obstacle".

(Invention 3) Claims 16-17
Claims 16-17 share, with claim 1 classified as invention 1 and claim 13 classified as invention 2, the technical feature of "an information processing device" "comprising" "an acquisition unit that acquires a plurality of information relating to the vehicle from a detection unit that includes a sensor for detecting a situation of the surroundings the vehicle including obstacles". However, this technical feature does not make a contribution over the prior art in the light of the content disclosed in document 1 (see, in particular, paragraph [0042]), and thus cannot be said to be a special technical feature. Furthermore, there are no other identical or corresponding special technical features between claims 16-17 and claim 1 or 13.
Additionally, claims 16-17 are also not dependent claims of claim 1 or 13. Moreover, claims 16-17 are not substantially identical to or similarly closely related to any of the claims classified as invention 1 or 2.
Therefore, claims 16-17 cannot be classified as either invention 1 or 2.
Claims 16-17 are classified as invention 3 due to having the special technical feature of "an information processing device in which the setting unit applies, as the driving strategy, a driving pattern relating to a driving route up to arriving at the destination which has avoided the obstacle, and sets a driving pattern among the plurality of different driving patterns at which the size of a space between the vehicle and the obstacle that changes in time series in accordance with movement of at least one among the vehicle and the obstacle is greatest".

(Invention 4) Claims 18-22
Claims 18-22 share, with claim 1 classified as invention 1, claim 13 classified as invention 2, and claim 16 classified as invention 3, the technical feature of "an information processing device" "comprising" "an acquisition unit that acquires a plurality of information relating to the vehicle from a detection unit that includes a sensor for detecting a situation of the surroundings the vehicle including obstacles". However, this technical feature does not make a contribution over the prior art in the light of the content disclosed in document 1 (see, in particular, paragraph

---

Form PCT/ISA/210 (continuation of first sheet) (January 2015)

## INTERNATIONAL SEARCH REPORT

International application No.

**PCT/JP2023/038225**

| Box No. III | Observations where unity of invention is lacking (Continuation of item 3 of first sheet) |
|---|---|

[0042]), and thus cannot be said to be a special technical feature. Furthermore, there are no other identical or corresponding special technical features between claims 18-22 and claim 1, 13, or 16.

Additionally, claims 18-22 are also not dependent claims of claim 1 or 16. Moreover, claims 18-22 are not substantially identical to or similarly closely related to any of the claims classified as invention 1, 2, or 3. Therefore, claims 18-22 cannot be classified as any of inventions 1, 2, and 3.

Claims 18-22 are classified as invention 4 due to having the special technical feature in which "an information processing device in which the setting unit applies, as the driving strategy, a driving pattern relating to a driving route up to arriving at the destination which has avoided the obstacle, uses the plurality of acquired information to set a weighting value corresponding to the risk of collision including contact with the obstacle for the plurality of different driving patterns, and selectively sets a driving pattern from the plurality of different driving patterns in accordance with the set weighting value".

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
### Information on patent family members

International application No.

**PCT/JP2023/038225**

| Patent document cited in search report | | | Publication date (day/month/year) | Patent family member(s) | | | Publication date (day/month/year) |
|---|---|---|---|---|---|---|---|
| WO | 2018/134941 | A1 | 26 July 2018 | US | 2019/0367018 | A1 | |
| | | | | paragraphs [0026]-[0107], fig. 4, 6-10 | | | |
| | | | | CN | 110177722 | A | |
| JP | 2019-123414 | A | 25 July 2019 | US | 2019/0221125 | A1 | |
| | | | | paragraphs [0027]-[0028] | | | |
| | | | | DE | 102019100168 | A1 | |
| | | | | CN | 110053611 | A | |
| JP | 2021-522101 | A | 30 August 2021 | US | 2021/0146922 | A1 | |
| | | | | entire text, all drawings | | | |
| | | | | DE | 102018109883 | A1 | |
| | | | | CN | 112005184 | A | |
| | | | | KR | 10-2021-0003751 | A | |
| JP | 2019-512824 | A | 16 May 2019 | US | 9645577 | B1 | |
| | | | | entire text, all drawings | | | |
| | | | | CN | 109313445 | A | |
| | | | | KR | 10-2019-0028365 | A | |
| | | | | KR | 10-2020-0011582 | A | |
| JP | 2019-206327 | A | 05 December 2019 | US | 2019/0317515 | A1 | |
| | | | | entire text, all drawings | | | |
| | | | | CN | 110389583 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035198 A
- JP 2022170165 A
- JP 2022182131 A
- JP 2022186645 A
- JP 2023000629 A
- JP 2023000630 A
- JP 2023002663 A
- JP 2023004746 A
- JP 2023008289 A
- JP 2023008290 A